(19) **Europäisches Patentamt / European Patent Office / Office européen des brevets**

(11) **EP 4 572 284 A1**

(12) **EUROPEAN PATENT APPLICATION**
published in accordance with Art. 153(4) EPC

(43) Date of publication:
**18.06.2025  Bulletin 2025/25**

(21) Application number: **22956997.5**

(22) Date of filing: **02.09.2022**

(51) International Patent Classification (IPC):
***H04L 45/0377*** *(2022.01)*

(52) Cooperative Patent Classification (CPC):
**H04L 45/0377**

(86) International application number:
**PCT/CN2022/116828**

(87) International publication number:
**WO 2024/045177 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **YAN, Xueqiang**
**Shenzhen, Guangdong 518129 (CN)**
• **XI, Yan**
**Shenzhen, Guangdong 518129 (CN)**
• **ZHAO, Mingyu**
**Shenzhen, Guangdong 518129 (CN)**
• **WU, Jianjun**
**Shenzhen, Guangdong 518129 (CN)**
• **YAN, Min**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA MESSAGE TRANSMISSION METHOD, COMMUNICATION APPARATUS AND COMMUNICATION SYSTEM**

(57) Embodiments of this application provide a data packet transmission method, a communication apparatus, and a communication system. The method includes: A first apparatus determines transmission path information based on data service information and a correspondence between the data service information and the transmission path information, where the transmission path information includes information about a second apparatus; and sends, to the second apparatus, a data packet or service data processed by the first apparatus. According to the solutions provided in this application, data processing can be implemented in a data packet transmission process, and data use efficiency can be improved.

**(Cont. next page)**

200

| Data orchestration apparatus | Data processing apparatus #0 | Data processing apparatus #1 | Data processing apparatus #2 |

S201: Correspondence information #1 → Correspondence information #2 →

S210: Obtain service data

S220: Determine the data processing apparatus #1

S230: Data packet ①

S240: Determine the data processing apparatus #2

S250: Data packet ②

S260: Configuration information #1 → Configuration information #2 → Configuration information #3 →

S261: Update information #1 → Update information #2 →

S262: Read information #1 → Read information #2 →

S263: Delete information #1 → Delete information #2 →

S270: Statistical information #1 ← Statistical information #2 Statistical information #3

FIG. 2

**Description**

**TECHNICAL FIELD**

Embodiments of this application relate to the communication field, and more specifically, to a data packet transmission method, a communication apparatus, and a communication system.

**BACKGROUND**

Data is generated, flows, and is consumed in a communication network. With the development of a network scale, a new technology, an application, and the like, the data in the network increases and becomes more important. Therefore, a complete service architecture is needed to efficiently use the data. In the past, the data exists as data silos. In other words, a specific application uses only its own data, and cannot use data of other applications or provide data obtained by itself for other applications to use. A data service is used to avoid data silos, to enable data to be used as a service by internal and external applications of the network and play its role.

Currently, a communication path needs to be established for information exchange between two network nodes. An intermediate node on the communication path is only responsible for forwarding a data packet, and does not process the data packet. In a forwarding process, routing and forwarding are performed based on a destination address in a header of the data packet. In a data service process, data processing processes such as collection, storage, forwarding, and analysis may be performed on different network nodes. How to transmit data between the foregoing network nodes that can process data is a problem that needs to be considered.

**SUMMARY**

Embodiments of this application provide a data packet transmission method, a communication apparatus, and a communication system, to implement data processing in a data packet transmission process and improve data use efficiency.

According to a first aspect, a data packet transmission method is provided. The method may be performed by a first apparatus. The first apparatus may be a functional network element in a network; or may be a chip or a circuit in a terminal device, a network device, a core network device, or an operations, administration, and maintenance device, or may be a logical module or software that can implement all or some functions of a terminal device, a network device, a core network device, or an operations, administration, and maintenance device. This is not limited in this application. The method includes: The first apparatus obtains a first data packet. The first data packet includes data service information. The first apparatus determines transmission path information based on the data service information and a correspondence between the data service information and the transmission path information. The transmission path information includes information about a second apparatus. The first apparatus sends a second data packet to the second apparatus. The second data packet includes the data service information. A data payload in the second data packet is obtained by processing a data payload in the first data packet.

In the foregoing solution, after processing the data payload in the data packet, the first apparatus may determine the next processing node of the data packet (that is, the second apparatus) based on the transmission path information, and transmit the processed data packet to the next processing node. In other words, in this solution, data packet processing is implemented in a data packet transmission process. In this way, a requirement for distributed data processing in a trend of communication sensing and computing convergence can be met, and data use efficiency can be improved.

According to a second aspect, a data packet transmission method is provided. The method may be performed by a first apparatus. The first apparatus may be a chip or a circuit in a terminal device, a network device, a core network device, or an operations, administration, and maintenance device; or may be a logical module or software that can implement all or some functions of a terminal device, a network device, a core network device, an operations, administration, and maintenance device, or the like. This is not limited in this application. The method includes: The first apparatus obtains service data, and determines transmission path information based on data service information and a correspondence between the data service information and the transmission path information. The transmission path information includes information about a second apparatus. The first apparatus sends a third data packet to the second apparatus. The third data packet includes the data service information and a data payload corresponding to the service data.

In the foregoing solution, after obtaining the service data, the first apparatus may determine the transmission path information based on the data service information, then determine the next processing node of the service data, that is, the second apparatus, encapsulate processed service data and the data service information into the third data packet, and transmit the third data packet to the next processing node. Subsequently, the second apparatus may determine, based on the data service information, a next processing node of the third data packet after the second apparatus. In other words, in this solution, data packet processing can be implemented by another node in a data packet transmission process. In this way, a requirement for distributed data processing in a trend of communication sensing and computing convergence can be met, and data use efficiency can be improved.

With reference to the first/second aspect, in some implementations of the first/second aspect, the information about the second apparatus is identification information or address information of the second apparatus.

With reference to the first/second aspect, in some implementations of the first/second aspect, the first apparatus receives correspondence information from the third apparatus. The correspondence information indicates the correspondence between the data service information and the transmission path information.

Based on the foregoing solution, the third apparatus configures the correspondence between the data service information and the transmission path information for the first apparatus. The first apparatus may determine the transmission path information based on the data service information, and may determine the next processing node based on the transmission path information. For the first apparatus, determining the next processing node and determining a next-hop node (physical route) of a data packet may be decoupled, thereby implementing strong compatibility.

With reference to the first/second aspect, in some implementations of the first/second aspect, the data service information includes first data service information, and the first data service information corresponds to N pieces of transmission path information. Herein, N is an integer greater than or equal to 1.

With reference to the first/second aspect, in some implementations of the first/second aspect, the correspondence indicated by the correspondence information includes a correspondence between the first data service information and the N pieces of transmission path information. Herein, N is an integer greater than 1. The first apparatus sends N data packets to N second apparatuses. Each second apparatus is associated with one data packet. Each data packet includes the first data service information.

Based on the foregoing solution, data payloads in the N data packets are the same, that is, a data packet multicast scenario; or data payloads in two data packets in the N data packets are different, that is, a data packet distribution scenario. In other words, based on this solution, data packet multicast and distribution can be implemented, that is, a flexible topology of a data packet transmission path can be implemented.

With reference to the first/second aspect, in some implementations of the first/second aspect, the correspondence indicated by the correspondence information includes a correspondence between the first data service information and one of the N pieces of transmission path information. Herein, N is an integer greater than 1.

Based on the foregoing solution, the data service information corresponds to the N pieces of transmission path information, and a specific piece of transmission path information in the N pieces of transmission path information is associated with the first apparatus. In other words, the N pieces of transmission path information correspond to different first apparatuses. In this solution, data packet aggregation can be implemented. In other words, initial processing nodes of data packets are different, and final processing nodes are the same. In this way, a flexible topology of a data packet transmission path can be implemented.

With reference to the first/second aspect, in some implementations of the first/second aspect, the first apparatus receives configuration information from the third apparatus. The configuration information is used to configure at least one of the following: a data packet statistics collection mode, a data packet statistics collection periodicity, and a valid time of the transmission path information.

Based on the foregoing solution, the first apparatus may report statistical information according to a configuration, and may transmit the data packet based on the transmission path information within the valid time of the transmission path information.

With reference to the first/second aspect, in some implementations of the first/second aspect, the first apparatus sends acknowledgment information to the third apparatus. The acknowledgment information is used to acknowledge the configuration information.

Based on the foregoing solution, the third apparatus may learn, based on the acknowledgment information, that the configuration has been completed, to avoid a waste of resources caused by sending the configuration information again.

With reference to the first/second aspect, in some implementations of the first/second aspect, the first apparatus receives update information from the third apparatus. The update information is used to update the transmission path information corresponding to the data service information.

Based on the foregoing solution, the first apparatus may subsequently transmit the data packet based on updated transmission path information.

With reference to the first/second aspect, in some implementations of the first/second aspect, the first apparatus sends acknowledgment information to the third apparatus. The acknowledgment information is used to acknowledge that the first apparatus completes update of the transmission path information.

Based on the foregoing solution, the third apparatus may learn, based on the acknowledgment information, that the transmission path information has been updated, to avoid a waste of resources caused by sending the update information again.

With reference to the first/second aspect, in some implementations of the first/second aspect, the first apparatus receives read information from the third apparatus. The read information is used to read the transmission path information corresponding to the data service information.

Based on the foregoing solution, in a debugging or troubleshooting phase, the transmission path information may be read based on the read information, to determine whether transmission path information corresponding to a specific piece of data service information is accurate, thereby improving system performance.

With reference to the first/second aspect, in some implementations of the first/second aspect, the first apparatus sends read response information to the third apparatus. The read response information may include the transmission path information corresponding to the data service information.

Based on the foregoing solution, in a debugging or troubleshooting phase, it may be determined based on the transmission path information in the read response information whether transmission path information corresponding to a specific piece of data service information is accurate, to help troubleshooting performed by the third apparatus, thereby improving system performance.

With reference to the first/second aspect, in some implementations of the first/second aspect, the first apparatus receives delete information from the third apparatus. The delete information is used to delete the transmission path information corresponding to the data service information.

Based on the foregoing solution, after a specific data service ends, transmission path information corresponding to the data service information may be deleted, to save storage resources of the first apparatus.

With reference to the first/second aspect, in some implementations of the first/second aspect, the first apparatus sends acknowledgment information to the third apparatus. The acknowledgment information is used to acknowledge that the first apparatus completes deletion of the transmission path information.

Based on the foregoing solution, the third apparatus may learn, based on the acknowledgment information, that the first apparatus completes a delete operation, to avoid a waste of transmission resources by sending a delete instruction again.

With reference to the first/second aspect, in some implementations of the first/second aspect, the first apparatus sends statistical information to the third apparatus. The statistical information includes data packet quantity information or data packet byte quantity information.

Based on the foregoing solution, the third apparatus can learn of a quantity of data packets/bytes passing through the first apparatus, so that the third apparatus determines whether to continue to allocate a data packet to the first apparatus subsequently for processing.

With reference to the first/second aspect, in some implementations of the first/second aspect, the statistical information is obtained through statistics collection at a granularity of data packet transmission path information or data service information.

Based on the foregoing solution, it is assumed that the statistical information is obtained through statistics collection at a granularity of the transmission path information. In this case, the third apparatus can determine a quantity of data packets/bytes passing through the first apparatus on each transmission path. It is assumed that the statistical information is obtained through statistics collection at a granularity of the data service information. In this case, the third apparatus can determine quantities of data packets/bytes of different data services processed by the first apparatus, to provide a reference for subsequent coordinated allocation performed by the third apparatus.

With reference to the first/second aspect, in some implementations of the first/second aspect, the data service information is any one of the following: an identifier of a federated learning service, an identifier of a distributed learning service, or an identifier of a data aggregation service.

According to a third aspect, a data packet transmission method is provided. The method may be performed by a third apparatus. The third apparatus may be a functional network element in a network; or may be a chip or a circuit in a network device or a core network device; or may be a logical module or software that can implement all or some functions of a network device or a core network device. This is not limited in this application. The method includes: The third apparatus generates correspondence information. The correspondence information indicates a correspondence between data service information and data packet transmission path information. The transmission path information includes information about a next data processing apparatus of a first apparatus. The third apparatus sends the correspondence information to the first apparatus.

Based on the foregoing solution, the third apparatus configures the correspondence between the data service information and the transmission path information for the first apparatus, so that the first apparatus can determine, based on the correspondence, transmission path information corresponding to a specific piece of data service information, and transmit a data packet based on the transmission path information. Data packet processing can be implemented by a processing node in a data packet transmission process. In this way, a requirement for distributed data processing in a trend of communication sensing and computing convergence can be met, and data use efficiency can be improved. In addition, in this solution, the third apparatus may dynamically construct and maintain data packet transmission path information, so that data packet transmission and processing processes are more flexible.

With reference to the third aspect, in some implementations of the third aspect, the information about the data processing apparatus is identification information or address information of the data processing apparatus.

With reference to the third aspect, in some implementations of the third aspect, the data service information includes first data service information, and the first data service information corresponds to N pieces of transmission path information. Herein, N is an integer greater than or equal to 1.

With reference to the third aspect, in some implementations of the third aspect, the correspondence indicated by the correspondence information includes a correspondence between the first data service information and the N pieces of transmission path information. Herein, N is an integer greater than 1.

Based on the foregoing solution, one piece of data service information may correspond to a plurality of transmission paths that use the first apparatus as an initial processing node, so that data packet multicast and distribution can be implemented. In this way, a flexible topology of a data packet transmission path can be implemented.

With reference to the third aspect, in some implementations of the third aspect, the third apparatus sends N pieces of correspondence information to N first apparatuses. Each first apparatus is associated with one piece of correspondence information. A correspondence indicated by the piece of correspondence information includes a correspondence between the first data service information and one of the N pieces of transmission path information. Herein, N is an integer greater than 1.

Based on the foregoing solution, one piece of data service information may correspond to a plurality of transmission paths that use a plurality of first apparatuses as initial processing nodes, so that data packet aggregation can be implemented. In this way, a flexible topology of a data packet transmission path can be implemented.

With reference to the third aspect, in some implementations of the third aspect, the third apparatus sends configuration information to the first apparatus. The configuration information is used to configure at least one of the following: a data packet statistics collection mode, a data packet statistics collection periodicity, and a valid time of the transmission path information.

With reference to the third aspect, in some implementations of the third aspect, the third apparatus receives acknowledgment information from the first apparatus. The acknowledgment information is used to acknowledge the configuration information.

With reference to the third aspect, in some implementations of the third aspect, the third apparatus sends update information to the first apparatus. The update information is used to update the transmission path information corresponding to the data service information.

With reference to the third aspect, in some implementations of the third aspect, the third apparatus receives acknowledgment information from the first apparatus. The acknowledgment information is used to acknowledge that the first apparatus completes update of the transmission path information.

With reference to the third aspect, in some implementations of the third aspect, the third apparatus sends read information to the first apparatus. The read information is used to read the transmission path information corresponding to the data service information.

With reference to the third aspect, in some implementations of the third aspect, the third apparatus receives read response information from the first apparatus. The read response information may include the transmission path information corresponding to the data service information.

With reference to the third aspect, in some implementations of the third aspect, the third apparatus sends delete information to the first apparatus. The delete information is used to delete the transmission path information corresponding to the data service information.

With reference to the third aspect, in some implementations of the third aspect, the third apparatus receives acknowledgment information from the first apparatus. The acknowledgment information is used to acknowledge that the first apparatus completes deletion of the transmission path information.

With reference to the third aspect, in some implementations of the third aspect, the third apparatus receives statistical information from the first apparatus. The statistical information includes data packet quantity information or data packet byte quantity information.

With reference to the third aspect, in some implementations of the third aspect, the statistical information is obtained through statistics collection at a granularity of transmission path information or data service information.

For beneficial effects of implementations whose beneficial effects are not described in the third aspect, refer to the descriptions of the beneficial effects in corresponding implementations of the second aspect. Details are not described herein again.

With reference to the third aspect, in some implementations of the third aspect, the data service information is any one of the following: an identifier of a federated learning service, an identifier of a distributed learning service, or an identifier of a data aggregation service.

According to a fourth aspect, a data packet transmission method is provided. The method may be applied to a communication system. The communication system includes a first apparatus and a third apparatus. The first apparatus may be a functional network element in a network; or may be a chip or a circuit in a terminal device, a network device, a core network device, or an operations, administration, and maintenance device; or may be a logical module or software that can implement all or some functions of a terminal device, a network device, a core network device, or an operations, administration, and maintenance device. This is not limited in this application. The third apparatus may be a functional network element in a network; or may be a chip or a circuit in a network device or a core network device; or may be a logical module or software that can implement all or some functions of a network device or a core network device. This is not limited in this application. The method includes: The third apparatus generates correspondence information. The correspondence information indicates a correspondence between data service information and data packet transmission path information. The transmission path information includes information about a next data processing node of a first apparatus, that is, a second apparatus. The third apparatus sends the correspondence information to the first apparatus. The first apparatus receives the correspondence information. The first apparatus obtains service data, and determines transmission path information based on data service information and the correspondence information. The first apparatus sends a third data packet to the second apparatus. The third data packet includes the data service information and a data payload corresponding to the service data.

Alternatively, the method includes: The third apparatus generates correspondence information. The correspondence information indicates a correspondence between data service information and data packet transmission path information. The transmission path information includes information about a next processing node of a first apparatus, that is, a second apparatus. The third apparatus sends the correspondence information to the first apparatus. The first apparatus receives the correspondence information. The first apparatus obtains a first data packet. The first data packet includes data service information. The first apparatus determines transmission path information based on the data service information and the correspondence information. The first apparatus sends a second data packet to the second apparatus. The second data packet includes the data service information. A data payload in the second data packet is obtained by processing a data payload in the first data packet.

Based on the foregoing solution, in the communication system, the third apparatus configures the correspondence between the data service information and the transmission path information for the first apparatus, so that the first apparatus can determine, based on the correspondence, transmission path information corresponding to a specific piece of data service information, and transmit a data packet based on the transmission path information. In this solution, the third apparatus may dynamically construct and maintain data packet transmission path information, so that a data packet transmission process is more flexible. The first apparatus may determine the next processing node of the data packet based on the transmission path information. Processing complexity of the first apparatus is relatively low.

With reference to the fourth aspect, in some implementations of the fourth aspect, the information about the second apparatus is identification information or address information of the second apparatus.

With reference to the fourth aspect, in some implementations of the fourth aspect, the data service information includes first data service information, and the first data service information corresponds to N pieces of transmission path information. Herein, N is an integer greater than or equal to 1.

With reference to the fourth aspect, in some implementations of the fourth aspect, the correspondence indicated by the correspondence information includes a correspondence between the first data service information and the N pieces of transmission path information. Herein, N is an integer greater than 1. The first apparatus determines N second apparatuses based on the first data service information and the correspondence information. The first apparatus sends N data packets to the N second apparatuses. Each second apparatus is associated with one data packet. Each data packet includes the first data service information.

With reference to the fourth aspect, in some implementations of the fourth aspect, the third apparatus sends N pieces of correspondence information to N first apparatuses. Each first apparatus is associated with one piece of correspondence information. A correspondence indicated by the piece of correspondence information includes a correspondence between the first data service information and one of the N pieces of transmission path information. Herein, N is an integer greater than 1.

With reference to the fourth aspect, in some implementations of the fourth aspect, the third apparatus sends configuration information. The configuration information is used to configure at least one of the following: a data packet statistics collection mode, a data packet statistics collection periodicity, and a valid time of the transmission path information. The first apparatus receives the configuration information.

With reference to the fourth aspect, in some implementations of the fourth aspect, the first apparatus sends acknowledgment information. The acknowledgment information is used to acknowledge the configuration information. The third apparatus receives the acknowledgment information.

With reference to the fourth aspect, in some implementations of the fourth aspect, the third apparatus sends update information. The update information is used to update the transmission path information corresponding to the data service information. The first apparatus receives the update information.

With reference to the fourth aspect, in some implementations of the fourth aspect, the first apparatus sends acknowledgment information. The acknowledgment information is used to acknowledge that the first apparatus completes update of the transmission path information. The third apparatus receives the acknowledgment information.

With reference to the fourth aspect, in some implementations of the fourth aspect, the third apparatus sends read information. The read information is used to read the transmission path information corresponding to the data service information. The first apparatus receives the read information.

With reference to the fourth aspect, in some implementations of the fourth aspect, the first apparatus sends read response information. The read response information may include the transmission path information corresponding to the data service information. The third apparatus receives the read response information.

With reference to the fourth aspect, in some implementations of the fourth aspect, the third apparatus sends delete information. The delete information is used to delete the transmission path information corresponding to the data service information. The first apparatus receives the delete information.

With reference to the fourth aspect, in some implementations of the fourth aspect, the first apparatus sends acknowledgment information. The acknowledgment information is used to acknowledge that the first apparatus completes deletion of the transmission path information. The third apparatus receives the acknowledgment information.

With reference to the fourth aspect, in some implementations of the fourth aspect, the first apparatus sends statistical information. The statistical information includes data packet quantity information or data packet byte quantity information. The third apparatus receives the statistical information.

With reference to the fourth aspect, in some implementations of the fourth aspect, the statistical information is obtained through statistics collection at a granularity of data packet transmission path information or data service information.

For beneficial effects of implementations whose beneficial effects are not described in the fourth aspect, refer to the descriptions of the beneficial effects in corresponding implementations of the second/third aspect. Details are not described herein again.

With reference to the fourth aspect, in some implementations of the fourth aspect, the data service information is any one of the following: an identifier of a federated learning service, an identifier of a distributed learning service, or an identifier of a data aggregation service.

According to a fifth aspect, a communication apparatus is provided. The communication apparatus is a first apparatus. The first apparatus may be a functional network element in a network; or may be a chip or a circuit in a terminal device, a network device, a core network device, or an operations, administration, and maintenance device; or may be a logical module or software that can implement all or some functions of a terminal device, a network device, a core network device, or an operations, administration, and maintenance device. This is not limited in this application. The first apparatus includes a transceiver unit and a processing unit. The transceiver unit is configured to obtain a first data packet. The first data packet includes data service information. The processing unit is configured to determine transmission path information based on the data service information and a correspondence between the data service information and the transmission path information. The transmission path information includes information about a second apparatus. The transceiver unit is configured to send a second data packet to the second apparatus. The second data packet includes the data service information. A data payload in the second data packet is obtained by processing a data payload in the first data packet.

According to a sixth aspect, a communication apparatus is provided. The communication apparatus is a first apparatus. The first apparatus may be a chip or a circuit in a terminal device, a network device, a core network device, or an operations, administration, and maintenance device; or may be a logical module or software that can implement all or some functions of a terminal device, a network device, a core network device, an operations, administration, and maintenance device, or the like. This is not limited in this application. The first apparatus includes a transceiver unit and a processing unit. The transceiver unit is configured to obtain service data. The processing unit is configured to determine transmission path information based on data service information and a correspondence between the data service information and the transmission path information. The transmission path information includes information about a second apparatus. The transceiver unit is further configured to send a third data packet to the second apparatus. The third data packet includes the data service information and a data payload corresponding to the service data.

With reference to the fifth/sixth aspect, in some implementations of the fifth/sixth aspect, the information about the second apparatus is identification information or address information of the second apparatus.

With reference to the fifth/sixth aspect, in some implementations of the fifth/sixth aspect, the transceiver unit is further configured to receive correspondence information from a third apparatus. The correspondence information indicates the correspondence between the data service information and the transmission path information.

With reference to the fifth/sixth aspect, in some implementations of the fifth/sixth aspect, the data service information includes first data service information, and the first data service information corresponds to N pieces of transmission path information. Herein, N is an integer greater than or equal to 1.

With reference to the fifth/sixth aspect, in some implementations of the fifth/sixth aspect, the correspondence indicated by the correspondence information includes a correspondence between the first data service information and the N pieces of transmission path information. Herein, N is an integer greater than 1. The transceiver unit is further configured to send N data packets to N second apparatuses. Each second apparatus is associated with one data packet. Each data packet includes the first data service information.

With reference to the fifth/sixth aspect, in some implementations of the fifth/sixth aspect, the correspondence indicated by the correspondence information includes a correspondence between the first data service information and one of the N pieces of transmission path information. Herein, N is an integer greater than 1.

With reference to the fifth/sixth aspect, in some implementations of the fifth/sixth aspect, the transceiver unit is further configured to receive configuration information from the third apparatus. The configuration information is used to configure at least one of the following: a data packet statistics collection mode, a data packet statistics collection periodicity, and a valid time of the transmission path information.

With reference to the fifth/sixth aspect, in some implementations of the fifth/sixth aspect, the transceiver unit is further configured to send acknowledgment information to the third apparatus. The acknowledgment information is used to acknowledge the configuration information.

With reference to the fifth/sixth aspect, in some implementations of the fifth/sixth aspect, the transceiver unit is further configured to receive update information from the third apparatus. The update information is used to update the transmission path information corresponding to the data service information.

With reference to the fifth/sixth aspect, in some implementations of the fifth/sixth aspect, the transceiver unit is further configured to send acknowledgment information to the third apparatus. The acknowledgment information is used to acknowledge that the first apparatus completes update of the transmission path information.

With reference to the fifth/sixth aspect, in some implementations of the fifth/sixth aspect, the transceiver unit is further configured to receive read information from the third apparatus. The read information is used to read the transmission path information corresponding to the data service information.

With reference to the fifth/sixth aspect, in some implementations of the fifth/sixth aspect, the transceiver unit is further configured to send read response information to the third apparatus. The read response information may include the transmission path information corresponding to the data service information.

With reference to the fifth/sixth aspect, in some implementations of the fifth/sixth aspect, the transceiver unit is further configured to receive delete information from the third apparatus. The delete information is used to delete the transmission path information corresponding to the data service information.

With reference to the fifth/sixth aspect, in some implementations of the fifth/sixth aspect, the transceiver unit is further configured to send acknowledgment information to the third apparatus. The acknowledgment information is used to acknowledge that the first apparatus completes deletion of the transmission path information.

With reference to the fifth/sixth aspect, in some implementations of the fifth/sixth aspect, the transceiver unit is further configured to send statistical information to the third apparatus. The statistical information includes data packet quantity information or data packet byte quantity information.

With reference to the fifth/sixth aspect, in some implementations of the fifth/sixth aspect, the statistical information is obtained through statistics collection at a granularity of data packet transmission path information or data service information.

With reference to the fifth/sixth aspect, in some implementations of the fifth/sixth aspect, the data service information is any one of the following: an identifier of a federated learning service, an identifier of a distributed learning service, or an identifier of a data aggregation service.

According to a seventh aspect, a communication apparatus is provided. The communication apparatus is a third apparatus. The third apparatus may be a functional network element in a network, or may be a chip or a circuit in a network device or a core network device, or may be a logical module or software that can implement all or some functions of a network device or a core network device. This is not limited in this application. The third apparatus includes a processing unit and a transceiver unit. The processing unit is configured to generate correspondence information. The correspondence information indicates a correspondence between data service information and data packet transmission path information. The transmission path information includes information about a next data processing apparatus of a first apparatus. The transceiver unit is configured to send the correspondence information to the first apparatus.

With reference to the seventh aspect, in some implementations of the seventh aspect, the information about the data processing apparatus is identification information or address information of the data processing apparatus.

With reference to the seventh aspect, in some implementations of the seventh aspect, the data service information includes first data service information, and the first data service information corresponds to N pieces of transmission path information. Herein, N is an integer greater than or equal to 1.

With reference to the seventh aspect, in some implementations of the seventh aspect, the correspondence indicated by the correspondence information includes a correspondence between the first data service information and the N pieces of transmission path information. Herein, N is an integer greater than 1.

With reference to the seventh aspect, in some implementations of the seventh aspect, the transceiver unit is further configured to send N pieces of correspondence information to N first apparatuses. Each first apparatus is associated with one piece of correspondence information. A correspondence indicated by the piece of correspondence information includes a correspondence between the first data service information and one of the N pieces of transmission path information. Herein, N is an integer greater than 1.

With reference to the seventh aspect, in some implementations of the seventh aspect, the transceiver unit is further configured to send configuration information to the first apparatus. The configuration information is used to configure at least one of the following: a data packet statistics collection mode, a data packet statistics collection periodicity, and a valid time of the transmission path information.

With reference to the seventh aspect, in some implementations of the seventh aspect, the transceiver unit is further configured to receive acknowledgment information from the first apparatus. The acknowledgment information is used to acknowledge the configuration information.

With reference to the seventh aspect, in some implementations of the seventh aspect, the transceiver unit is further configured to send update information to the first apparatus. The update information is used to update the transmission path information corresponding to the data service information.

With reference to the seventh aspect, in some implementations of the seventh aspect, the transceiver unit is further configured to receive acknowledgment information from the first apparatus. The acknowledgment information is used to acknowledge that the first apparatus completes update of the transmission path information.

With reference to the seventh aspect, in some implementations of the seventh aspect, the transceiver unit is further configured to send read information to the first apparatus. The read information is used to read the transmission path information corresponding to the data service information.

With reference to the seventh aspect, in some implementations of the seventh aspect, the transceiver unit is further configured to receive read response information from the first apparatus. The read response information may include the transmission path information corresponding to the data service information.

With reference to the seventh aspect, in some implementations of the seventh aspect, the transceiver unit is further configured to send delete information to the first apparatus. The delete information is used to delete the transmission path information corresponding to the data service information.

With reference to the seventh aspect, in some implementations of the seventh aspect, the transceiver unit is further configured to receive acknowledgment information from the first apparatus. The acknowledgment information is used to acknowledge that the first apparatus completes deletion of the transmission path information.

With reference to the seventh aspect, in some implementations of the seventh aspect, the transceiver unit is further configured to receive statistical information from the first apparatus. The statistical information includes data packet quantity information or data packet byte quantity information.

With reference to the seventh aspect, in some implementations of the seventh aspect, the statistical information is obtained through statistics collection at a granularity of transmission path information or data service information.

With reference to the seventh aspect, in some implementations of the seventh aspect, the data service information is any one of the following: an identifier of a federated learning service, an identifier of a distributed learning service, or an identifier of a data aggregation service.

According to an eighth aspect, a communication apparatus is provided. The apparatus includes a processor. The processor is coupled to a memory, and may be configured to execute instructions in the memory, to implement the method according to either of the first aspect and the second aspect and any possible implementation of either of the first aspect and the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first apparatus. The first apparatus may be a functional network element in a network; or may be a chip or a circuit in a terminal device, a network device, a core network device, or an operations, administration, and maintenance device; or may be a logical module or software that can implement all or some functions of a terminal device, a network device, a core network device, or an operations, administration, and maintenance device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver. A signal output by the output circuit may be output to, but not limited to, a transmitter and transmitted by the transmitter. The input circuit and the output circuit may be a same circuit. The circuit is used as the input circuit and the output circuit at different moments. Specific implementations of the processor and the various circuits are not limited in embodiments of this application.

According to a ninth aspect, a communication apparatus is provided. The apparatus includes a processor. The processor is coupled to a memory, and may be configured to execute instructions in the memory, to implement the method according to the third aspect and any possible implementation of the third aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a third apparatus. The third apparatus may be a functional network element in a network, or may be a chip or a circuit in a network device or a core network device, or may be a logical module or software that can implement all or some functions of a network device or a core network device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver. A signal output by the output circuit may be output to, but not limited to, a transmitter and transmitted by the transmitter. The input circuit and the output circuit may be a same circuit. The circuit is used as the input circuit and the output circuit at different moments. Specific implementations of the processor and the various circuits are not limited in embodiments of this application.

According to a tenth aspect, a communication apparatus is provided. The apparatus includes a logic circuit and an input/output interface. The logic circuit is configured to couple to the input/output interface, and transmit data through the input/output interface, to perform the method according to any one of the first aspect to the third aspect and any possible implementation of the first aspect to the third aspect.

According to an eleventh aspect, a communication system is provided. The system includes a first apparatus and a third apparatus. The first apparatus is configured to perform the method according to either of the first aspect and the second aspect and any possible implementation of the first aspect and the second aspect. The third apparatus is configured to perform the method according to the third aspect and any possible implementation of the third aspect.

According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the third aspect and any possible implementation of the first aspect to the third aspect.

According to a thirteenth aspect, a computer program product is provided. The computer program product includes a computer program (which may also be referred to as code or instructions). When the computer program is run, a computer is enabled to perform the method according to any one of the first aspect to the third aspect and any possible implementation of the first aspect to the third aspect.

For beneficial effects brought by the fifth aspect to the thirteenth aspect, refer to the descriptions of the beneficial effects in the first aspect to the third aspect. Details are not described herein again.

## BRIEF DESCRIPTION OF DRAWINGS

FIG. 1 shows a network architecture according to an embodiment of this application;
FIG. 2 is an interaction flowchart of a data packet transmission method according to an embodiment of this application;
FIG. 3 is a diagram of a data aggregation scenario according to an embodiment of this application;
FIG. 4 is a diagram of a data aggregation scenario and a data distribution scenario according to an embodiment of this application;
FIG. 5 is a block diagram of a communication apparatus according to an embodiment of this application;
FIG. 6 is a diagram of a structure of a communication apparatus according to an embodiment of this application; and
FIG. 7 is a diagram of a structure of another communication apparatus according to an embodiment of this application.

## DESCRIPTION OF EMBODIMENTS

The following describes technical solutions of embodiments in this application with reference to accompanying drawings.

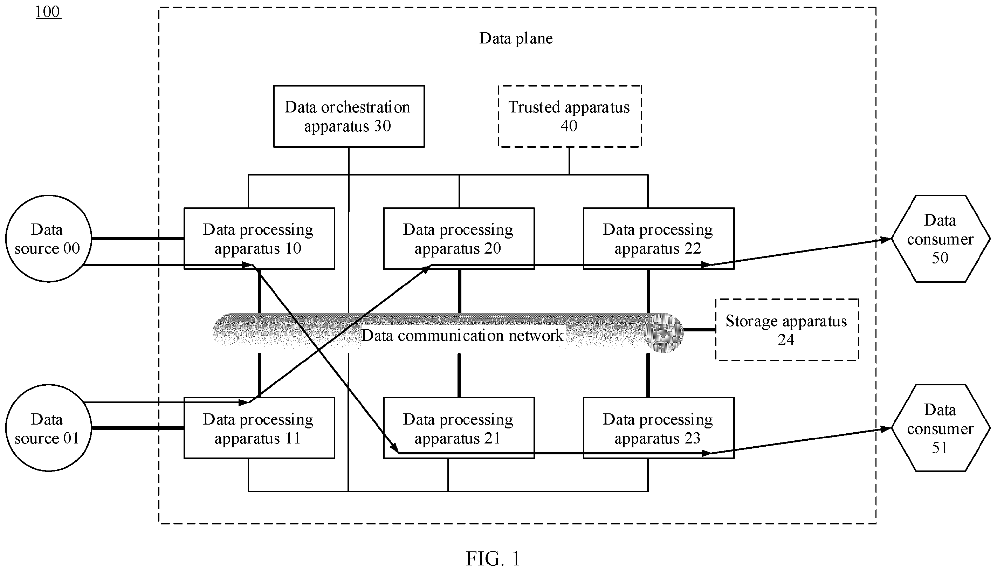

FIG. 1 shows a network architecture according to an embodiment of this application.

The communication system 100 shown in FIG. 1 includes a data source, a data plane, and a data consumer. The data source (for example, a data source 00 or a data source 01) may be an apparatus that generates service data. The data plane is used for data processing, for example, data collection, data storage, data preprocessing, data analysis, and a data service application programming interface (application programming interface, API). The data consumer (for example, a data consumer 50 or a data consumer 51) may be an apparatus that uses processed data. The data plane includes a data processing apparatus (for example, a data processing apparatus 10, a data processing apparatus 11, a data processing apparatus 20, a data processing apparatus 21, a data processing apparatus 22, and a data processing apparatus 23) and a data orchestration apparatus 30. The data processing apparatus may be a service data processing node. The data orchestration apparatus may configure basic information for the data processing apparatus, for example, configure identification information. Different data services may be related to different data processing nodes. Therefore, different data services may correspond to different transmission paths. FIG. 1 shows two data transmission paths. A first path is the data source 00→the data processing apparatus 10-the data processing apparatus 21→the data processing apparatus 23→the data consumer 51. A second path is the data source 01→the data processing apparatus 11→the data processing apparatus 20→the data processing apparatus 22→the data consumer 50. Herein, "→" indicates a service data transmission direction. The data communication network shown in FIG. 1 may work as a message bus for data exchange between different data processing apparatuses.

For example, the data processing apparatus may be a data agent (data agent, DA), and may perform processing work such as collection, storage, preprocessing, and analysis on data. The data processing apparatus may be independently deployed, for example, deployed in a network in a form of a network function (network function, NF) or a network element. Alternatively, the data processing apparatus may be built in a network node, for example, built in a terminal device, a radio access network (radio access network, RAN) node, a core network (core network, CN) node, or an operations, administration, and maintenance (operations, administration, and maintenance, OAM) node. When the data processing apparatus is not independently deployed, the data processing apparatus may be combined with an existing function in the foregoing node to implement a data processing function. Alternatively, the data processing apparatus may be evolved from the foregoing node. For example, the data processing apparatus is evolved from a network data analysis function (network data analysis function, NWDAF), and includes an existing function of the NWDAF, a scenario instance implemented based on the NWDAF, and the like. This is not limited in this application.

For example, the data orchestration apparatus may be a data orchestration (data orchestrator, DO), and may receive a data service requirement (the data service requirement is, for example, data collection, or federated learning training or inference based on network-collected data) from an application, and determine a data processing apparatus based on the requirement, that is, dynamically establish an end-to-end (end to end, E2E) overlay (overlay) topology (topology) network for a data application. The overlay topology network is a data processing network. A network node (that is, a data processing apparatus) in the network is a data processing node. The DO may orchestrate flow of data between DAs in the data communication network, and may feed back a response to the requirement to the application, for example, feed back, to the application, that the overlay topology network has been established. The data orchestration apparatus may be independently deployed, for example, deployed in a network in a form of an NF or a network element. Alternatively, the data orchestration apparatus may be built in a network node, for example, built in a RAN node or a CN node. This is not limited in this application.

It may be understood that the overlay network is relative to an underlay (underlay) network, and is a logical network established on the underlay network. By using a network virtualization technology, one or more virtual logical networks may be constructed on the same underlay network. Different overlay networks can share devices and lines in the underlay network, but services in the overlay networks can be decoupled from physical networking and interconnection technologies in the underlay network.

Optionally, the data plane further includes a trusted apparatus 40. The trusted apparatus is configured to implement data trustworthiness and protect data from being attacked.

For example, the trusted apparatus may be a trust anchor (trust anchor, TA), may provide a security service such as authentication, authorization, and accounting (authentication, authorization, and accounting, AAA), and store data that cannot be tampered with, a public key of user equipment (user equipment, UE) or a network element (network element, NE), data that has a small data volume but has a feature that the data cannot be tampered with, or other important data that cannot be tampered with.

Optionally, the data plane further includes a storage apparatus 24.

For example, when a large volume of data needs to be stored, or when data needs to be stored for a long time, the storage device may be used as a storage extension of the processing apparatus. The storage apparatus is, for example, a data storage function (data storage function, DSF) network element. This is not limited in this application.

A method provided in embodiments of this application may further relate to a device or a communication node that is not shown in FIG. 1. Certainly, the communication method provided in embodiments of this application may alternatively include only a part of the devices or the communication nodes shown in FIG. 1. This is not limited in embodiments of this application.

It may be understood that names (for example, the data orchestration apparatus, the data processing apparatus, the DO, the DA, and the TA) shown in the foregoing descriptions or figure are merely examples. The foregoing apparatuses may alternatively have other names. This is not limited in this application.

The foregoing network architecture used in embodiments of this application is merely an example for description, and a network architecture applicable to embodiments of this application is not limited thereto. Any network architecture that can implement functions of all or a part of the foregoing devices is applicable to embodiments of this application.

The terminal device may be a wireless terminal device that can receive scheduling and indication information of a network device. The terminal device may be a device that provides a user with voice and/or data connectivity, a handheld device with a wireless connection function, or another processing device connected to a wireless modem.

The terminal device may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. A terminal device is a device that includes a wireless communication function (providing a user with voice/data connectivity), for example, a handheld device or a vehicle-mounted device having a wireless connection function. The terminal in embodiments of this application may be a mobile phone (mobile phone), a tablet computer (pad), a computer having wireless transmitting and receiving functions, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, a vehicle device, a vehicle-mounted module, or a vehicle) in an internet of vehicles, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network (for example, 6G), or the like.

The wearable device may also be referred to as a wearable intelligent device, and is a general term for wearable devices, such as glasses, gloves, watches, clothes, and shoes, that are developed through applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one specific type of application function and need to work with other devices such as smartphones, such as various smart bands or smart jewelry for monitoring physical signs.

An access network node may be a device in a wireless network. For example, the access network node may be a device that is deployed in a radio access network and that provides a wireless communication function for a terminal device. For example, the access network node may be a radio access network (radio access network, RAN) node that connects a terminal device to a wireless network, and may also be referred to as an access network device.

The access network node includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseband unit, BBU), a server, a wearable device, a vehicle-mounted device, an access point (access point, AP) in a Wi-Fi system, a wireless relay node, a wireless backhaul node, a transmission point (transmission point, TP), a transmission and reception point (transmission and reception point, TRP), or the like. The access network node may alternatively be a gNB or a transmission point (TRP or TP) in a 5G system, for example, an NR system, or one antenna panel or a group of antenna panels (including a plurality of antenna panels) of a base station in a 5G system. The access network node may alternatively be a network node that constitutes a gNB or a transmission point, for example, a baseband unit (BBU) or a distributed unit (distributed unit, DU). Alternatively, the access network node may be an access network node in 6G. This is not limited in this application. The base station may be a macro base station, a micro base station, a pico base station, a small cell, a relay station, a balloon station, or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions at radio resource control (radio resource control, RRC) and packet data convergence protocol (packet data convergence protocol, PDCP) layers. The DU is responsible for processing a physical layer protocol and real-time service, and implements functions at radio link control (radio link control, RLC), media access control (media access control, MAC), and physical (physical, PHY) layers. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Functions of the core network node are to provide user connection, manage a user, and complete bearer of a session service.

The technical solutions in embodiments of this application may be applied to various communication systems, for example, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a wireless fidelity (wireless fidelity, Wi-Fi) communication system, a universal mobile telecommunications system (universal mobile telecommunications system, UMTS), a worldwide interoperability for microwave access (worldwide interoperability for microwave access, WiMAX) communication system, a 5th generation (5th Generation, 5G) system or a future evolved communication system (for example, a 6G mobile communication system), vehicle-to-everything (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an internet of vehicles, machine-type communication (machine-type communication, MTC), an internet of things (internet of things, IoT), long term evolution-machine (long term evolution-machine, LTE-M), machine to machine (machine to machine, M2M), and the like.

Data generated in a communication network is transmitted to each data processing node in a form of a data packet. For example, network sensing data, user data, artificial intelligence (artificial intelligence, AI) data, and IoT data need to be carried by a data pipeline (data pipeline, DP) that includes functions such as collection, processing, transmission, storage, and analysis. One data pipeline may be understood as one path (for example, the first path or the second path shown in FIG. 1) in an overlay topology network. A data orchestration apparatus may determine processing nodes on one data pipeline. For example, the data orchestration apparatus may establish a data pipeline based on a data service request and a capability of each data processing apparatus. The data pipeline may be unidirectional. After the data pipeline is established, a processing node on the data pipeline may be determined, and an operation that needs to be performed by each processing node on data may be determined. Data flows on the data pipeline. A processing operation is completed at a processing node through which the data passes.

It may be understood that the data pipeline is a name used to describe the solutions of this application more clearly, and the data pipeline may alternatively be replaced with another name. This is not limited in this application.

Each processing node on the data pipeline needs to perform corresponding processing (on-path-packet-processing) (for example, collection, preprocessing, transmission, storage, and analysis) on a data packet including a data payload, and then forward a processed data packet to a next processing node. Communication between different processing nodes on the data pipeline may depend on a communication path in an underlay network. How each processing node on the data pipeline determines a next processing node of the data packet may be decoupled from the underlay network. The following describes a method for transmitting a data packet between processing nodes provided in this application.

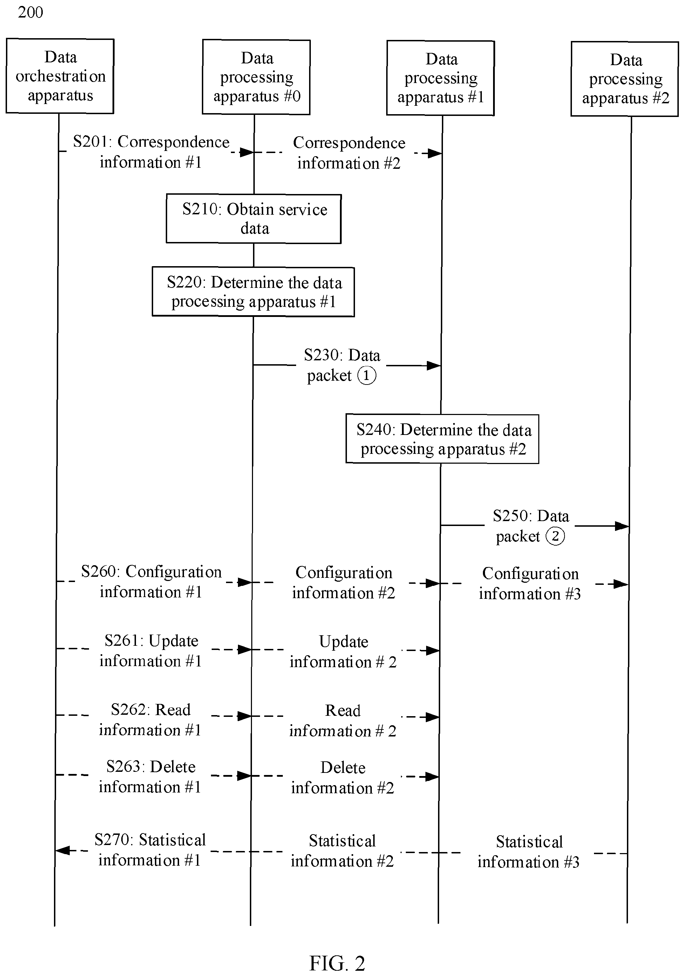

FIG. 2 is an interaction flowchart of a data packet transmission method according to an embodiment of this application. FIG. 2 is merely an example, and is applicable to a scenario in which a data packet transmission path corresponding to data service information is a data processing apparatus #0→a data processing apparatus #1→a data processing apparatus #2. When a data packet transmission path corresponding to a specific piece of data service information relates to another apparatus (an apparatus other than the apparatuses shown in FIG. 2), reference may be made to the method 200 shown in FIG. 2. A data packet transmission method is similar. Related data packet processing apparatuses may be different. Therefore, a transmission path of a data packet, a quantity of data processing apparatuses through which the data packet passes, and a specific processing operation performed by each data processing apparatus on the data packet are not limited in this application. The method 200 shown in FIG. 2 includes:

Optionally, in S201, a data orchestration apparatus sends correspondence information #1. The correspondence information #1 indicates a correspondence between data service information and transmission path information #1. The transmission path information #1 includes information about the data processing apparatus #1. Correspondingly, the data processing apparatus #0 receives the correspondence information #1. Optionally, the data orchestration apparatus sends correspondence information #2. The correspondence information #2 indicates a correspondence between the data service information and transmission path information #2. The transmission path information #2 includes information about the data processing apparatus #2. Correspondingly, the data processing apparatus #0 receives the correspondence information #2.

It may be understood that in S201, the data orchestration apparatus may send the correspondence information #1 to the data processing apparatus #0 and send the correspondence information #2 to the data processing apparatus #1 at the same time or not at the same time. This is not limited in this application.

In addition, in the example in FIG. 2, the data processing apparatus #2 is a final processing node for service data of a data service. Therefore, in this example, after a data packet ② arrives at the data processing apparatus #2, the data processing apparatus #2 processes a data payload in the data packet ②, and does not send a processed data payload to another apparatus after the processing is completed. Therefore, for the data service, the data orchestration apparatus may not send a correspondence between the data service information and transmission path information to the data processing apparatus #2.

Optionally, a data packet processing node (for example, the data processing apparatus shown in FIG. 1, including the data processing apparatus #0, the data processing apparatus #1, and the data processing apparatus #2) sends registration information to the data orchestration apparatus. The registration information may indicate a capability/function of the data packet processing node. The data orchestration apparatus generates, based on registration information of each data processing apparatus, an overlay network including the data processing apparatus. In addition, the data orchestration apparatus may allocate an identifier to each data processing apparatus in the overlay network. The foregoing process of allocating the identifier to each data processing apparatus may be referred to as an initialization process of the overlay network.

Optionally, before the data orchestration apparatus sends the correspondence information, the data orchestration apparatus calculates transmission paths for different data service requests based on a data service request of an application and the capability/function of the data processing apparatus in the overlay network.

For example, the data orchestration apparatus obtains, through calculation based on a data service request of a federated learning application, a data packet transmission path of federated learning: the data processing apparatus #0→ the data processing apparatus #1→the data processing apparatus #2. The data processing apparatus #0 (for example, a DA #1, where the DA #1 is an ingress DA) is a first processing node of the data packet, or may be understood as a network node that generates the data packet. The ingress may be understood as an ingress of a data pipeline. For the federated learning data packet, the data processing apparatus #1 (for example, a DA #2) is a next processing node after the data processing apparatus #0, and the data processing apparatus #2 (for example, a DA #3) is a next processing node after the data processing apparatus #1.

For example, the correspondence generated by the data orchestration apparatus is, for example, Table 1.

Table 1

| Data service information | Data processing apparatus #0 | Transmission path information |
|---|---|---|
| DS_ID 1 | DA #1 | (DA #1, DA #2, DA #3) |
| | DA #3 | (DA #3, DA #6, DA #4) |
| DS_ID 2 | DA #1 | (DA #1, DA #2, DA #4|DA #5) |

As shown in Table 1, if a data service identifier (data service identifier, DS ID) of the federated learning application is DS_ID 1, transmission path information corresponding to DS_ID 1 is (DA #1, DA #2, DA #3). The data orchestration apparatus may send the correspondence information #1 to the data processing apparatus #0 (the DA #1). The correspondence information #1 is a correspondence between DS_ID 1 and the transmission path information #1. The transmission path information #1 is, for example, (DA #1, DA #2, DA #3), (DA #1, DA #2), (DA #2, DA#3), or (DA #2). The data orchestration apparatus may send the correspondence information #2 to the data processing apparatus #1 (the DA #2). The correspondence information #2 is a correspondence between DS_ID 1 and the transmission path information #2. The transmission path information #2 is, for example, (DA #1, DA #2, DA #3), (DA #2, DA #3), or (DA #3).

In addition, one data service identifier may correspond to a plurality of pieces of transmission path information. For example, DS_ID 1 further corresponds to transmission path information (DA #3, DA #6, DA #4). The data orchestration apparatus may send correspondence information #a1 to the DA #3. The correspondence information #a1 is a correspondence between DS_ID 1 and transmission path information #a1. The transmission path information #a1 is, for example, (DA #3, DA #6, DA#4), (DA #3, DA #6), (DA #6, DA #4), or (DA #6) The data orchestration apparatus may send correspondence information #a2 to the DA #6. The correspondence information #a2 is a correspondence between DS_ID 1 and transmission path information #a2. The transmission path information #a2 is, for example, (DA #3, DA #6, DA #4), (DA #6, DA #4), or (DA #4).

Initial processing nodes of a transmission path (the DA #1→the DA #2→the DA #3) and a transmission path (the DA #3→the DA #6→the DA #4) are different, and final processing nodes are the same. This is applicable to a data aggregation scenario.

DS_ID 2 corresponds to one data processing apparatus #0 (that is, the DA #1), and corresponds to two pieces of transmission path information (DA #1, DA #2, DA #4) and (DA #1, DA #2, DA #5). The data orchestration apparatus sends information about a correspondence between DS_ID 2 and transmission path information #b1, and information about a correspondence between DS_ID 2 and transmission path information #c1 to the DA #1. The transmission path information #b1 is, for example, (DA #1, DA #2, DA #4), (DA #1, DA #2), (DA #2, DA #4), or (DA #2). The transmission path information #c1 is, for example, (DA #1, DA #2, DA#5), (DA #1, DA#2), (DA#2, DA #5), or (DA #2). The data orchestration apparatus sends information about a correspondence between DS_ID 2 and transmission path information #b2, and information about a correspondence between DS_ID 2 and transmission path information #c2 to the DA #2. The transmission path information #b2 is, for example, (DA #1, DA #2, DA #4), (DA #2, DA #4), or (DA #4). The transmission path information #c2 is, for example, (DA #1, DA #2, DA #5), (DA #2, DA #5), or (DA #5)

Initial processing nodes of a transmission path (the DA #1→the DA #2→the DA #4) and a transmission path (the DA #1→the DA #2→the DA #5) are the same, and final processing nodes are different. This is applicable to a data distribution or multicast scenario.

It should be understood that S201 may be performed before S210, or S201 may be performed before S220. This is not limited in this application.

It may be understood that Table 1 is merely an example, and Table 1 may further be transformed to another form. This is not limited in this application. For example, Table 1 is transformed so that a first column is the data processing apparatus #0, and a second column is the data service information. Details are not listed one by one herein.

It may be further understood that the correspondence information sent by the data orchestration apparatus to the data processing apparatus in S201 may indicate a correspondence between one or more pieces of data service information and transmission path information. In other words, for one piece of data service information, the data orchestration apparatus may send a correspondence between the data service information and transmission path information to a related data processing apparatus. For example, with reference to Table 1, for DS_ID 1, the data orchestration apparatus sends information about a correspondence between DS_ID 1 and (DA #1, DA #2, DA #3) to the DA #1, and sends information about a correspondence between DS_ID 1 and (DA #3, DA #6, DA #4) to the DA #3. Alternatively, for the data processing apparatus, the data orchestration apparatus may send a correspondence between data service information and transmission path information to each data processing apparatus, where the correspondence is related to the data processing apparatus. For example, for the DA #1, the data orchestration apparatus sends the information about the correspondence between DS_ID 1 and (DA #1, DA #2, DA #3), and information about a correspondence between DS_ID 2 and (DA #1, DA #2, DA #4|DA #5) to the DA #1. Correspondences of different data service information may be sent simultaneously or separately. This is not limited in this application. From the correspondence information sent by the data orchestration apparatus, the DA #1 may select, based on the obtained data service information, a correspondence for use. For example, if the data service information obtained by the DA #1 is DS_ID 1, it may be determined, based on the correspondences of different data service information, that data packet transmission path information corresponding to DS_ID 1 is (DA #1, DA #2, DA #3).

Optionally, after receiving the correspondence information, the data processing apparatus #0 and/or the data processing apparatus #1 store/stores the transmission path information corresponding to the data service information.

For example, the data processing apparatus #0 and/or the data processing apparatus #1 locally store/stores a correspondence table between data service information and transmission path information. After receiving the correspondence information, the data processing apparatus #0 and/or the data processing apparatus #1 write/writes the transmission path information corresponding to the data service information into the correspondence table.

Optionally, after storing the transmission path information corresponding to the data service information, the data processing apparatus #0 and/or the data processing apparatus #1 send/sends acknowledgment information to the data orchestration apparatus. The acknowledgment information indicates that the data processing apparatus #0 and/or the data processing apparatus #1 have/has stored the transmission path information corresponding to the data service information. After receiving the acknowledgment information, the data orchestration apparatus may acknowledge that the data processing apparatus #0 and/or the data processing apparatus #1 have/has stored the transmission path information corresponding to the data service information.

S210: The data processing apparatus #0 obtains service data.

In a possible implementation, the data processing apparatus #0 is an apparatus for collecting data or a first processing node of the service data, that is, an initial processing node.

For example, the data processing apparatus #0 is an ingress DA (the data processing apparatus 10/11 shown in FIG. 1) of a data pipeline, and the ingress DA is configured to obtain the service data from a data source. The data source is a source that generates service data, for example, a sensor or a collector with embedded network function parameters. The service data is data gathered/collected from the data source. For example, the service data includes data sensed by a sensor, performance data of a network function in network data, or resource utilization information. Different data sources may correspond to different types of service data. For example, when the data source is a temperature sensor, the service data is data representing a temperature; or when the data source is a pressure sensor, the service data is data representing pressure. This is not limited in this application.

S220: The data processing apparatus #0 determines the data processing apparatus #1.

In a possible implementation, the data processing apparatus #0 determines the transmission path information #1 based on data service (data service, DS) information and a correspondence between data service information and transmission path information. The transmission path information #1 includes information about the data processing apparatus #1. The data processing apparatus #1 is a next processing node of the data processing apparatus #0.

It should be understood that the data service is a framework based on processing such as data collection, storage, forwarding, and analysis, meets requirements of data laws and regulations, considers both data sharing and security, and provides data as a service product. The data service information may be an identifier of the data service. Different applications (data consumers) may have different data service requirements. Therefore, different applications correspond to different data services, and data service information may be used to distinguish between different data services.

For example, the data service includes federated learning, distributed learning, and data aggregation; and the data service information is the data service identifier. For example, a data service identifier of a federated learning service is DS_ID 1, a data service identifier of a distributed learning service is DS_ID 2, and a data service identifier of a data aggregation service is DS_ID 3. Different data service identifiers may correspond to different transmission path information. Only some data services are listed above, and the listed data service identifiers are merely examples. This is not limited in this application.

Specifically, the data processing apparatus #0 may determine the data service information based on the obtained service data, and may determine, based on the correspondence between the data service information and the transmission path information, the transmission path information corresponding to the data service information.

Alternatively, the data processing apparatus #0 obtains the service data, obtains the data service information corresponding to the service data, and determines, based on a correspondence between the data service information and data packet transmission path information, transmission path information corresponding to a specific data service. The transmission path information may be encapsulated into the data packet.

It may be understood that the data processing apparatus #0 locally stores the correspondence between the data service information and the data packet transmission path information, or the data processing apparatus #0 may obtain the correspondence from a data orchestration apparatus. A manner of obtaining the correspondence is not limited in this application.

For example, the transmission path information may correspond to a data service identifier or a data pipeline identifier, and the data pipeline identifier is, for example, DP_ID. The service data obtained by the data processing apparatus #0 is data used for federated learning. The data service identifier of federated learning is DS_ID 1. A data pipeline identifier corresponding to the federated learning service is DP_ID 1. The data pipeline identifier may correspond to the data service identifier. For example, DS_ID 1 corresponds to DP_ID 1, and DS_ID 1/DP_ID 1 corresponds to the transmission path information #1.

In a possible implementation, the transmission path information #1 includes an identifier of one or more data processing apparatuses, and the one or more data processing apparatuses include the data processing apparatus #1.

The identifier of the data processing apparatus may be pre-allocated by the data orchestration apparatus (for example, the data orchestration apparatus shown in FIG. 1). In other words, the data orchestration apparatus may allocate an identifier to each data processing apparatus (including the data processing apparatus #0, the data processing apparatus #1, and the data processing apparatus #2) in the overlay network.

For example, the transmission path information #1 is (DA_ID 1, DA_ID 2, DA_ID 3), (DA_ID 1, DA_ID 2), (DA_ID 2, DA_ID 3), or (DA_ID 2). DA_ID 1 (corresponding to the data processing apparatus #0), DA_ID 2 (corresponding to the data processing apparatus #1), and DA_ID 3 (corresponding to the data processing apparatus #2) are the identifiers pre-allocated by the data orchestration apparatus. The data processing apparatus #0 may determine, based on the transmission path information #1, that a processing node of a data packet ① is the data processing apparatus #1.

In another possible implementation, the transmission path information #1 includes an address of one or more data processing apparatuses, and the one or more data processing apparatuses include the data processing apparatus #1.

The address of the data processing apparatus may be a routing address of a corresponding processing node in an underlay network. This is not limited in this application.

For example, the transmission path information #1 is (Add 1, Add 2, Add 3), (Add 1, Add 2), (Add 2, Add 3), or (Add 2). Add 1 (that is, Address 1) is an address of the data processing apparatus #0, and Add 2 (that is, Address 2) is an address of the data processing apparatus #1. The data processing apparatus #0 may determine, based on the transmission path information #1, that the processing node of the data packet ① is the data processing apparatus #1.

It may be understood that a format of the transmission path information is merely an example. This is not limited in this application.

S230: The data processing apparatus #0 sends the data packet ① to the data processing apparatus #1. The data packet ① includes the data service information and a data payload corresponding to the service data. Correspondingly, the data processing apparatus #1 receives the data packet ①.

For example, the data processing apparatus #0 processes the service data to obtain the data payload, and encapsulates the data payload into the data packet ①. A header of the data packet ① may include the data service information, for example, the data service identifier. The data service identifier is used by the data processing apparatus #1 to determine a next processing node of the data processing apparatus #1 based on the correspondence between the data service identifier and the transmission path information.

In addition, the data processing apparatus #0 and the data processing apparatus #1 are nodes in the overlay network. Therefore, in an actual transmission process of the data packet ①, the data processing apparatus #0 may determine a routing path from the data processing apparatus #0 to the data processing apparatus #1 in an addressing manner of the underlay network, to send the data packet ① to the data processing apparatus #1.

It may be understood that the data packet ① in S230 corresponds to the third data packet in the summary.

In a possible implementation, if an identifier of the data processing apparatus #1 in the overlay network is the same as an address of the data processing apparatus #1 in the underlay network, the data processing apparatus #0 may determine the routing path from the data processing apparatus #0 to the data processing apparatus #1 in the underlay network based on the identifier of the data processing apparatus #1, and transmit the data packet ① to the data processing apparatus #1 through the routing path.

In another possible implementation, an identifier of the data processing apparatus #1 in the overlay network is different from an address of the data processing apparatus #1 in the underlay network. In this implementation, the data processing apparatus #0 may locally store a correspondence between the identifier of the data processing apparatus #1 in the overlay network and the address of the data processing apparatus #1 in the underlay network, determine the address of the data processing apparatus #1 based on the correspondence, determine the routing path from the data processing apparatus #0 to the data processing apparatus #1 in the underlay network, and transmit the data packet ① to the data processing apparatus #1 through the routing path.

In a possible implementation, the data service information in S201 includes data service information #1, and the data service information #1 corresponds to N pieces of transmission path information. Herein, N1 is an integer greater than or equal to 1. This implementation may be applied to the data multicast scenario.

S230 may be replaced with the following:

The data processing apparatus #0 sends N1 data packets to at least one data processing apparatus #1. Each data processing apparatus is associated with at least one data packet. Each data packet includes the data service information #1. Herein, N1 is an integer greater than 1.

For example, the data service information #1 is DS_ID 0. If DS_ID 0 corresponds to three pieces of transmission path information (that is, N1=3), the three pieces of transmission path information (transmission path information #2, transmission path information #3, and transmission path information #4) correspond to three data processing apparatuses #1: respectively the DA #2, the DA #3, and the DA #4. For example, the transmission path information #2 corresponds to the DA #2, the transmission path information #3 corresponds to the DA #3, and the transmission path information #4 corresponds to the DA #4. In this case, the data processing apparatus #0 sends a data packet #2 to the DA #2, where a header of the data packet #2 includes DS_ID 0; sends a data packet #3 to the DA #3, where a header of the data packet #3 includes DS_ID 0; and sends a data packet #4 to the DA #4, where a header of the data packet #4 includes DS_ID 0. Data payloads in the data packet #2, the data packet #3, and the data packet #4 are the same. The data payloads are obtained through processing based on the service data.

In a possible implementation, the data service information in S201 includes data service information #2, and the data service information #2 corresponds to N2 pieces of transmission path information. Herein, N2 is an integer greater than or equal to 1. This implementation may be applied to the data distribution scenario.

S230 may be replaced with the following:

The data processing apparatus #0 sends N2 data packets to at least one data processing apparatus. Each data processing apparatus is associated with at least one data packet. Each data packet includes the data service information #2. The N2 data packets include two data packets with different data payloads.

For example, the data service information #2 is DS_ID 1. If DS_ID 1 corresponds to three pieces of transmission path information (that is, N2=3), the three pieces of transmission path information (transmission path information #5, transmission path information #6, and transmission path information #7) correspond to three data processing apparatuses #1: respectively the DA #5, the DA #6, and the DA #7. For example, the transmission path information #5 corresponds to the DA #5, the transmission path information #6 corresponds to the DA #6, and the transmission path information #7 corresponds to the DA #7. In this case, the data processing apparatus #0 sends a data packet #5 to the DA #5, where a header of the data packet #5 includes DS_ID 1; sends a data packet #6 to the DA #6, where a header of the data packet #6 includes DS_ID 1; and sends a data packet #7 to the DA #7, where a header of the data packet #7 includes DS_ID 1. Data payloads in two data packets in the data packet #5, the data packet #6, and the data packet #7 are different. The data payloads are obtained through processing based on the service data.

In a possible implementation, the data service information #3 corresponds to M pieces of transmission path information, and the M pieces of transmission path information correspond to M1 data processing apparatuses #0. Herein, M is an integer greater than 1, and M1 is less than or equal to M. The correspondence information in S201 indicates a correspondence between the data service information #3 and one of the M pieces of transmission path information. This implementation may be applied to the data aggregation scenario.

For example, the data service information #3 is DS_ID 2, and DS_ID 2 corresponds to three pieces of transmission path information (that is, M=3): respectively transmission path information #a, transmission path information #b, and transmission path information #c. A data processing apparatus #0 corresponding to the transmission path information #a is the DA #0, a data processing apparatus #0 corresponding to the transmission path information #b is the DA #1, and a data processing apparatus #0 corresponding to the transmission path information #c is the DA #2 (that is, M1=M=3). In this case, the DA #0 sends a data packet #8, where a header of the data packet #8 includes DS_ID 2; the DA #1 sends a data packet #9, where a header of the data packet #9 includes DS_ID 2; and the DA #2 sends a data packet #10, where a header of the data packet #10 includes DS_ID 2. The data packet #8, the data packet #9, and the data packet #10 may finally arrive at a same node. Data payloads in the data packet #8, the data packet #9, and the data packet #10 are obtained through processing based on service data obtained by transmit ends of the data packet #8, the data packet #9, and the data packet #10.

For example, if DS_ID 2 corresponds to three pieces of transmission path information (that is, M=3): respectively transmission path information #a, transmission path information #b, and transmission path information #c, a data processing apparatus #0 corresponding to the transmission path information #a is the DA #0, a data processing apparatus #0 corresponding to the transmission path information #b is the DA #1, and a data processing apparatus #0 corresponding to the transmission path information #c is the DA #1 (that is, M1=2). In this case, the DA #0 sends a data packet #11, where a header of the data packet #11 includes DS_ID 2; the DA #1 sends a data packet #12, where a header of the data packet #12 includes DS_ID 2; and the DA #1 sends a data packet #13, where a header of the data packet #13 includes DS_ID 2. Final processing nodes of the data packet #11, the data packet #12, and the data packet #13 may be a same node.

It may be understood that different data service identifiers may correspond to same transmission path information, or different data service identifiers may correspond to different transmission path information. This is not limited in this application. The foregoing examples do not limit the protection scope of this application.

In the foregoing enumerated application scenarios of data packet processing and forwarding, for example, data multicast, data distribution, and data aggregation, a flexible topology of different data packet transmission paths is implemented, and flexibility of data packet processing and forwarding is improved.

S240: After obtaining the data packet ①, the data processing apparatus #1 determines the data processing apparatus #2 based on the data service information in the data packet ①.

In a possible implementation, the data processing apparatus #1 determines, based on the data service information in the data packet ① and the locally stored correspondence between the data service information and the transmission path information, the transmission path information #2 corresponding to the data service information.

For example, the transmission path information #2 determined by the data processing apparatus #1 based on the data service information and the locally stored correspondence between the data service information and the transmission path information is (DA_ID 5), where DA_ID 5 is the identifier of the data processing apparatus #2. The data processing apparatus #1 determines the data processing apparatus #2 based on (DA_ID 5).

For example, the transmission path information #2 determined by the data processing apparatus #1 based on the data service information and the locally stored correspondence between the data service information and the transmission path information is (Add 5), where Add 5 is an address of the data processing apparatus #2. The data processing apparatus #1 determines the data processing apparatus #2 based on (Add 5).

S250: The data processing apparatus #1 sends the data packet ②. The data packet ② includes the data service information and the data payload. The data payload in the data packet ② is obtained by processing a data payload in the data packet ①. Correspondingly, the data processing apparatus #2 receives the data packet ②.

It may be understood that, if the data processing apparatus #1 determines that the transmission path information corresponding to the data service information includes a plurality of data processing apparatuses #2, the data processing apparatus #1 may determine the plurality of data processing apparatuses #2 with reference to the related descriptions in S230, and send data packets to the plurality of data processing apparatuses #2. Specific content is not described again.

For example, the data processing apparatus #1 processes the data payload in the data packet ①, and encapsulates a processed data payload into the data packet ②. A header of the data packet ② may include the data service information, for example, a data service identifier.

In addition, the data processing apparatus #1 and the data processing apparatus #2 are nodes in the overlay network. Therefore, in an actual transmission process of the data packet ②, the data processing apparatus #1 may determine a routing path from the data processing apparatus #1 to the data processing apparatus #2 in an addressing manner of the underlay network, to send the data packet ② to the data processing apparatus #2.

In a possible implementation, if an identifier of the data processing apparatus #2 in the overlay network is the same as an address of the data processing apparatus #2 in the underlay network, the data processing apparatus #1 may determine the routing path from the data processing apparatus #1 to the data processing apparatus #2 in the underlay network based on the identifier of the data processing apparatus #2, and transmit the data packet ② to the data processing apparatus #2 through the routing path.

In another possible implementation, an identifier of the data processing apparatus #2 in the overlay network is different from an address of the data processing apparatus #2 in the underlay network. In this implementation, the data processing apparatus #1 may locally store a correspondence between the identifier of the data processing apparatus #2 in the overlay network and the address of the data processing apparatus #2 in the underlay network, determine the address of the data processing apparatus #2 based on the correspondence, determine the routing path from the data processing apparatus #1 to the data processing apparatus #2 in the underlay network, and transmit the data packet ② to the data processing apparatus #2 through the routing path.

It may be understood that, in S240, the data packet ① corresponds to the first data packet in the summary, and the data packet ② corresponds to the second data packet in the summary.

Optionally, the method 200 further includes:

S260: The data orchestration apparatus sends configuration information #1. The configuration information #1 is used to configure at least one of the following: a data packet statistics collection mode, a data packet statistics collection periodicity, and a valid time of the transmission path information. Correspondingly, the data processing apparatus #0 receives the configuration information #1. The data orchestration apparatus sends configuration information #2. The configuration information #2 is used to configure at least one of the following: a data packet statistics collection mode, a data packet statistics collection periodicity, and a valid time of the transmission path information. Correspondingly, the data processing apparatus #1 receives the configuration information #2.

It may be understood that, in S260, the data orchestration apparatus may send the configuration information #1 to the data processing apparatus #0 and send the configuration information #2 to the data processing apparatus #1 at the same time or not at the same time, or the data orchestration apparatus may send the configuration information #1 to the data processing apparatus #0 or send the configuration information #2 to the data processing apparatus #1. This is not limited in this application.

For example, when the data packet statistics collection mode is configured in the configuration information #1, the data processing apparatus #0 may collect statistics of a data packet based on the statistics collection mode. When the data packet statistics collection periodicity is configured in the configuration information #1, the data processing apparatus #0 may collect statistics of a data packet based on the statistics collection periodicity. When the valid time of the transmission path information is configured in the configuration information #1, the data processing apparatus #0 may transmit a data packet based on the transmission path information within the valid time of the transmission path information (for example, the transmission path information locally stored in the data processing apparatus #0). An operation performed based on the configuration information #2 after the data processing apparatus #1 receives the configuration information #2 is similar to an operation performed after the data processing apparatus #0 receives the configuration information #1. For specific content, refer to the foregoing description. Details are not described again.

In addition, in the example in FIG. 2, the data processing apparatus #2 is the final processing node for the data packet of the data service, and does not locally store the transmission path information corresponding to the data service information. Therefore, the data orchestration apparatus may send configuration information #3 to the data processing apparatus #2. The configuration information #3 is used to configure at least one of the following: a data packet statistics collection mode and a data packet statistics collection periodicity. An operation performed based on the configuration information #3 after the data processing apparatus #2 receives the configuration information #3 is similar to an operation performed after the data processing apparatus #0 receives the configuration information #1. For specific content, refer to the foregoing description. Details are not described again. Because the data processing apparatus #2 does not locally store the transmission path information for the data service information, the configuration information #3 may not include the valid time of the transmission path information. If the data processing apparatus #2 locally stores transmission path information corresponding to other data service information, the configuration information #3 may include a valid time of the transmission path information corresponding to the other data service information.

The data processing apparatus may determine a statistics collection manner of statistical information based on the configured statistics collection mode, to perform statistics collection and reporting on the statistical information according to the configuration.

Optionally, the data processing apparatus #0 sends acknowledgment information to the data orchestration apparatus. The acknowledgment information is used to acknowledge the configuration information #1. After receiving the acknowledgment information, the data orchestration apparatus determines that the configuration information #1 has been accurately received by the data processing apparatus #0, in other words, the configuration operation has been completed.

Optionally, the data processing apparatus #1 sends acknowledgment information to the data orchestration apparatus. The acknowledgment information is used to acknowledge the configuration information #2. After receiving the acknowledgment information, the data orchestration apparatus determines that the configuration information #2 has been accurately received by the data processing apparatus #1, in other words, the configuration operation has been completed.

Optionally, the data processing apparatus #2 sends acknowledgment information to the data orchestration apparatus. The acknowledgment information is used to acknowledge the configuration information #3. After receiving the acknowledgment information, the data orchestration apparatus determines that the configuration information #3 has been accurately received by the data processing apparatus #2, in other words, the configuration operation has been completed.

For example, statistics collection modes may be distinguished by using statistics collection mode codes. The following describes meanings of different statistics collection mode codes:

000: indicates that a quantity of packets is counted at a granularity of data service information.
001: indicates that a quantity of packets is counted at a granularity of transmission path information.
010: indicates that a quantity of bytes is counted at a granularity of data service information.
011: indicates that a quantity of bytes is counted at a granularity of transmission path information.
100: indicates that a quantity of packets and a quantity of bytes are counted at a granularity of data service information.
101: indicates that a quantity of packets and a quantity of bytes are counted at a granularity of transmission path information.
111: indicates that statistics collection and reporting are not performed.

The data processing apparatus #0 or the data processing apparatus #1 may perform statistics collection and reporting on the statistical information to the data orchestration apparatus after the data packet is sent. The data processing apparatus #2 may perform statistics collection and reporting on the statistical information to the data orchestration apparatus after the data packet arrives. This is not limited in this application.

It may be understood that the foregoing statistics collection mode code and the meaning corresponding to the statistics collection mode code are predefined or preconfigured by the data orchestration apparatus and each data processing apparatus (for example, the data processing apparatus #0, the data processing apparatus #1, and the data processing apparatus #2). It should be noted that the meanings indicated by the foregoing different statistics collection mode codes may be interchanged. This is not limited in this application.

Optionally, the method 200 further includes:

S261: The data orchestration apparatus sends update information #1. The update information #1 is used to update the transmission path information corresponding to the data service information. Correspondingly, the data processing apparatus #0 receives the update information #1. The data orchestration apparatus sends update information #2. The update information #2 is used to update the transmission path information corresponding to the data service information. Correspondingly, the data processing apparatus #1 receives the update information #1.

It may be understood that, in S261, the data orchestration apparatus may send the update information #1 to the data processing apparatus #0 and send the update information #2 to the data processing apparatus #1 at the same time or not at the same time, or the data orchestration apparatus may send the update information #1 to the data processing apparatus #0 or send the update information #2 to the data processing apparatus #1. This is not limited in this application.

For example, the data processing apparatus #0 locally stores the correspondence between the data service information and the transmission path information. After receiving the update information #1, the data processing apparatus #0 may update, based on the update information #1, transmission path information corresponding to a specific piece of data service information. For example, the data processing apparatus #0 locally stores the correspondence between DS_ID 1 and the transmission path information #1, and the update information #1 includes the correspondence between DS_ID 1 and the transmission path information #2. The data processing apparatus #0 may update the correspondence between DS_ID 1 and the transmission path information #1 to the correspondence between DS_ID 1 and the transmission path information #2 based on the update information #1, and transmit the data packet for DS_ID 1 based on the transmission path information #2 after the update. An operation performed based on the update information #2 after the data processing apparatus #1 receives the update information #2 is similar to an operation performed after the data processing apparatus #0 receives the update information #1. For specific content, refer to the foregoing description. Details are not described again.

In addition, in the example in FIG. 2, the data processing apparatus #2 is the final processing node for the data packet of the data service, and does not locally store the transmission path information corresponding to the data service information. In other words, the data orchestration apparatus does not send, to the data processing apparatus #2, the update information for the transmission path information corresponding to the data service information. If the data processing apparatus #2 locally stores the transmission path information corresponding to the other data service information, the data orchestration apparatus may send, to the data processing apparatus #2, update information for the transmission path information corresponding to the other data service information. This is not shown in FIG. 2.

Optionally, the data processing apparatus #0 sends acknowledgment information to the data orchestration apparatus. The acknowledgment information is used to acknowledge the update information #1. After receiving the acknowledgment information, the data orchestration apparatus determines that the update information #1 has been accurately received by the data processing apparatus #0, in other words, the update operation has been completed.

Optionally, the data processing apparatus #1 sends acknowledgment information to the data orchestration apparatus. The acknowledgment information is used to acknowledge the update information #2. After receiving the acknowledgment information, the data orchestration apparatus determines that the update information #2 has been accurately received by the data processing apparatus #1, in other words, the update operation has been completed.

Optionally, if the data orchestration apparatus sends, to the data processing apparatus #2, the update information for the transmission path information corresponding to the other data service information, the data processing apparatus #2 may send the acknowledgment information, so that the data orchestration apparatus receives the acknowledgment information and then determines that the update operation has been completed.

The transmission path information may be updated instead of being always fixed. Therefore, the data processing apparatus may transmit a data packet based on updated transmission path information, thereby improving flexibility of data packet transmission and processing.

Optionally, the method 200 further includes:

S262: The data orchestration apparatus sends read information #1. The read information #1 is used to read transmission path information corresponding to a specific piece of data service information. Correspondingly, the data processing apparatus #0 receives the read information #1. The data orchestration apparatus sends read information #2. The read information #2 is used to read transmission path information corresponding to a specific piece of data service information. Correspondingly, the data processing apparatus #1 receives the read information #2.

It may be understood that, in S262, the data orchestration apparatus may send the read information #1 to the data processing apparatus #0 and send the read information #2 to the data processing apparatus #1 at the same time or not at the same time, or the data orchestration apparatus may send the read information #1 to the data processing apparatus #0 or send the read information #2 to the data processing apparatus #1. This is not limited in this application.

For example, the read information #1 includes DS_ID 0. This indicates that the data processing apparatus #0 sends transmission path information corresponding to DS_ID 0.

For example, the read information #2 includes DS_ID 1. This indicates that the data processing apparatus #1 sends transmission path information corresponding to DS_ID 1.

Optionally, the data processing apparatus #0 sends read response information to the data orchestration apparatus. The read response information includes transmission path information corresponding to a specific piece of data service information (data service information included in the read information #1). After receiving the read response information, the data orchestration apparatus determines that the read information #1 has been accurately received by the data processing apparatus #0, in other words, the read operation has been completed.

Optionally, the data processing apparatus #1 sends read response information to the data orchestration apparatus. The read response information includes transmission path information corresponding to a specific piece of data service information (data service information included in the read information #2). After receiving the read response information, the data orchestration apparatus determines that the read information #2 has been accurately received by the data processing apparatus #1, in other words, the read operation has been completed.

For example, the read response information includes the transmission path information #0 corresponding to DS_ID 0.

For example, the read response information includes the transmission path information #1 corresponding to DS_ID 1.

In addition, in the example in FIG. 2, the data processing apparatus #2 does not locally store the transmission path information corresponding to the data service information. In other words, the data orchestration apparatus does not send the read information for the data service information to the data processing apparatus #2. If the data processing apparatus #2 locally stores the transmission path information corresponding to the other data service information, the data orchestration apparatus may send, to the data processing apparatus #2, read information for the other data service information. This is not shown in FIG. 2.

Optionally, if the data orchestration apparatus sends the read information for the other data service information to the data processing apparatus #2, the data processing apparatus #2 may send the read response information, so that the data orchestration apparatus receives the read response information and then determines the transmission path information corresponding to the other data service information.

It should be understood that in a debugging or troubleshooting phase, the data orchestration apparatus may determine based on the transmission path information in the read response information whether transmission path information corresponding to a specific piece of data service information is accurate, to help troubleshooting performed by the data orchestration apparatus, thereby improving system performance.

Optionally, the method 200 further includes:

S263: The data orchestration apparatus sends delete information #1. The delete information #1 is used to delete the transmission path information corresponding to the data service information. Correspondingly, the data processing apparatus #0 receives the delete information #1. The data orchestration apparatus sends delete information #2. The delete information #2 is used to delete the transmission path information corresponding to the data service information.

Correspondingly, the data processing apparatus #1 receives the delete information #2.

It may be understood that, in S263, the data orchestration apparatus may send the delete information #1 to the data processing apparatus #0 and send the delete information #2 to the data processing apparatus #1 at the same time or not at the same time, or the data orchestration apparatus may send the delete information #1 to the data processing apparatus #0 or send the delete information #2 to the data processing apparatus #1. This is not limited in this application.

For example, when a data service corresponding to the data service information has ended, the data orchestration apparatus may indicate, by using the delete information #1, the data processing apparatus #0 to delete the transmission path information corresponding to the data service information. The delete information may include the transmission path information that needs to be deleted.

For example, when a data service corresponding to the data service information has ended, the data orchestration apparatus may indicate, by using the delete information #2, the data processing apparatus #1 to delete the transmission path information corresponding to the data service information. The delete information may include the transmission path information that needs to be deleted.

For example, the data orchestration apparatus obtains or receives a data service request. The data service request is used to request to delete the transmission path information corresponding to the data service information. The data orchestration apparatus sends the delete information to indicate the data processing apparatus #0 and the data processing apparatus #1 to delete the transmission path information corresponding to the data service information. The delete information may include the transmission path information that needs to be deleted.

Optionally, the data processing apparatus #0 sends acknowledgment information to the data orchestration apparatus. The acknowledgment information is used to acknowledge the delete information #1. After receiving the acknowledgment information, the data orchestration apparatus determines that the delete information #1 has been accurately received by the data processing apparatus #0, in other words, the delete operation has been completed. Correspondingly, the data orchestration apparatus also deletes the transmission path information corresponding to the data service information.

Optionally, the data processing apparatus #1 sends acknowledgment information to the data orchestration apparatus. The acknowledgment information is used to acknowledge the delete information #2. After receiving the acknowledgment information, the data orchestration apparatus determines that the delete information #2 has been accurately received by the data processing apparatus #1, in other words, the delete operation has been completed. Correspondingly, the data orchestration apparatus also deletes the transmission path information corresponding to the data service information.

In S263, the data processing apparatus #0 or the data processing apparatus #1 deletes the transmission path information according to an instruction of the data orchestration apparatus. In addition, the data processing apparatus #0 or the data processing apparatus #1 may periodically trigger deletion of the transmission path information corresponding to the data service information without the instruction of the data orchestration apparatus. After the deletion is completed, the data orchestration apparatus is notified. The data orchestration apparatus also deletes the transmission path information corresponding to the data service information.

After the specific data service ends or the transmission path information corresponding to the specific piece of data service information is deleted according to the data service request, storage resources of the data orchestration apparatus or the data processing apparatus can be saved.

It may be understood that the acknowledgment information in S260 to S263 may enable the data orchestration apparatus to determine whether the data processing apparatus #0 and the data processing apparatus #1 correctly receive the information (for example, the configuration information, the update information, the read information, or the delete information) and whether the instruction operation of the information is completed, thereby avoiding a waste of communication resources caused due to repeated transmission of the information because the data orchestration apparatus does not know whether the information has been correctly received by the data processing apparatus #0 and the data processing apparatus #1 and whether the instruction operation of the information has been completed.

In addition, in the example in FIG. 2, the data processing apparatus #2 does not locally store the transmission path information corresponding to the data service information. In other words, the data orchestration apparatus does not send, to the data processing apparatus #2, the delete information for the transmission path information corresponding to the data service information. If the data processing apparatus #2 locally stores the transmission path information corresponding to the other data service information, the data orchestration apparatus may send, to the data processing apparatus #2, delete information for the transmission path information corresponding to the other data service information. This is not shown in FIG. 2.

Optionally, if the data orchestration apparatus sends, to the data processing apparatus #2, the delete information for the transmission path information corresponding to the other data service information, the data processing apparatus #2 may send the acknowledgment information, so that the data orchestration apparatus receives the acknowledgment information and then determines that the delete operation has been completed. Similarly, the data processing apparatus #2 may delete the transmission path information according to a request of the data orchestration apparatus, or may periodically trigger deletion of the transmission path information.

Optionally, the method 200 further includes:

S270: The data processing apparatus #0 sends statistical information #1. The statistical information #1 includes data packet quantity information or data packet byte quantity information. Correspondingly, the data orchestration apparatus receives the statistical information #1. The data processing apparatus #1 sends statistical information #2. The statistical information #2 includes data packet quantity information or data packet byte quantity information. Correspondingly, the data orchestration apparatus receives the statistical information #2. The data processing apparatus #2 sends statistical information #3. The statistical information #3 includes data packet quantity information or data packet byte quantity information. Correspondingly, the data orchestration apparatus receives the statistical information #3.

It may be understood that occasions in which the data processing apparatus #0 sends the statistical information #1 to the data orchestration apparatus, the data processing apparatus #1 sends the statistical information #2 to the data orchestration apparatus, and the data processing apparatus #2 sends the statistical information #3 to the data orchestration apparatus are not limited in this application.

In a possible implementation, the statistical information (for example, the statistical information #1, the statistical information #2, or the statistical information #3) is obtained through statistics collection at a granularity of data packet transmission path information or data service information.

Example #1: A format of a statistical packet including statistical information is shown in the following Table 2:

Table 2

| Identifier | Statistics collection mode | Statistical value | Timestamp |
|---|---|---|---|
| DP_ID 0 | 001 | nPacket | Time #1 |

In this example, the identifier DP_ID 0 is used to identify that the statistical information indicates to count a quantity of packets at a granularity of transmission path information, the statistical value in the statistical packet is a quantity of data packets corresponding to DP_ID 0 (which may be understood as a transmission path identifier or a data pipeline identifier corresponding to the transmission path information #0), and the time #1 is a time of statistics collection on the statistical information or a time of encapsulating the statistical packet. This is not limited in this application. The timestamp below is also understood herein. Details are not described again below.

The statistical value is $nPacket(DP_i) = \sum_{j=1}^{m} nPacket(DS_j)$, where nPacket($DP_i$) represents a quantity of data packets corresponding to DP_ID i (i=0), *nPacket(DS_j)* represents a quantity of data packets of a specific data service corresponding to DP_ID 0, and m represents a quantity of data services corresponding to DP_ID 0.

Example #2: A format of a statistical packet including statistical information is shown in the following Table 3:

Table 3

| Identifier | Statistics collection mode | Statistical value | Timestamp |
|---|---|---|---|
| DP_ID 0 | 011 | nByte | Time #2 |

In this example, the identifier DP_ID 0 is used to identify that the statistical information indicates to count a quantity of bytes at a granularity of transmission path information, and the statistical value in the statistical packet is a quantity of bytes corresponding to DP_ID 0.

The statistical value is $nByte(DP_i) = \sum_{j=1}^{m} nByte(DS_j)$, where nByte($DP_i$) represents a quantity of bytes in a data packet corresponding to DP_ID i (i=0), nByte($DS_j$) represents a quantity of bytes of a specific data service corresponding to DP_ID 0, and m represents a quantity of data services corresponding to DP_ID 0.

Example #3: A format of a statistical packet including statistical information is shown in the following Table 4:

Table 4

| Identifier | Statistics collection mode | Statistical value | Timestamp |
|---|---|---|---|
| DS_ID 0 | 000 | nPacket | Time #3 |

In this example, the identifier DS_ID 0 is used to identify that the statistical information indicates to count a quantity of packets at a granularity of data service information, and the statistical value in the statistical packet is a quantity of data packets corresponding to DS_ID 0.

The statistical value is $nPacket(DS_i) = \sum_{j=1}^{m} nPacket(DP_j)$, where nPacket($DS_i$) represents a quantity of data packets corresponding to DS_ID i (i=0), *nPacket*(*DP_j*) represents a quantity of data packets on a specific transmission path corresponding to DS_ID 0, and m represents a quantity of transmission paths corresponding to DS_ID 0.

Example #4: A format of a statistical packet including statistical information is shown in the following Table 5:

Table 5

| Identifier | Statistics collection mode | Statistical value | Timestamp |
|---|---|---|---|
| DS_ID 0 | 010 | nByte | Time #4 |

In this example, the identifier DS_ID 0 is used to identify that the statistical information indicates to count a quantity of bytes at a granularity of data service information, and the statistical value in the statistical packet is a quantity of bytes corresponding to DS_ID 0.

The statistical value is $nByte(DS_i) = \sum_{j=1}^{m} nByte(DP_j)$, where nByte($DS_i$) represents a quantity of bytes in a data packet corresponding to DS_ID i (i=0), *nByte*(*DP_j*) represents a quantity of bytes on a specific transmission path corresponding to DS_ID 0, and m represents a quantity of transmission paths corresponding to DS_ID 0.

Example #5: The statistical information may be collected and reported at a granularity of a DA.

If a quantity of data packets is reported by using a DA, a statistical value is as follows:

$nPacket(DA_k) = \sum_{i=1}^{m} \sum_{j}^{n} nPacket(DS_i, DP_j)$, m represents a quantity of data services corresponding to a specific transmission path, n represents a quantity of transmission paths corresponding to a specific data service, and nPacket($DA_k$) is a quantity of all data packets that pass through ($DA_k$).

If a quantity of bytes in a data packet is reported by using a DA, a statistical value is as follows:

$nByte(DA_k) = \sum_{i=1}^{m} \sum_{j}^{n} nByte(DS_i, DP_j)$, and nByte($DA_k$) is a quantity of bytes in all data packets that pass through ($DA_k$).

Example #5: The statistical information may be further collected and reported at a granularity of a DS|DP. This is applicable to a scenario in which one data service corresponds to a plurality of transmission paths (different transmission paths are distinguished by using data pipeline identifiers, that is, DP_IDs), or one transmission path corresponds to a plurality of data services. For example, DS_ID 0 corresponds to DP_ID 0, DP_ID 1, and DP_ID 2. nPacket($DS_i$,$DP_j$) = *nPacket*($DS_i|DP_j$), nByte($DS_i$,$DP_j$) = *nByte*($DS_i|DP_j$), for example, nPacket($DS_0$,$DP_0$) = *nPacket*($DS_0|DP_0$), and nByte($DS_0$,$DP_0$) = *n*Byte($DS_0|DP_0$). Herein, *nPacket*($DS_0|DP_0$) represents a quantity of data packets whose data service identifier is DS_ID 0 and whose data pipeline identifier is DP_ID 0, and *nByte*($DS_0|DP_0$) represents a quantity of bytes in a data packet whose data service identifier is DS_ID 0 and whose data pipeline identifier is DP_ID 0.

It may be understood that reporting of the statistical information may be triggered periodically. In other words, the data processing apparatus (the data processing apparatus #0, the data processing apparatus #1, or the data processing apparatus #2) may periodically report the statistical information to the data orchestration apparatus. Alternatively, the data orchestration apparatus sends a request to the data processing apparatus, and the data processing apparatus performs statistics collection and reporting on the statistical information as requested. This is not limited in this application.

It may be further understood that Table 2 to Table 5 are merely examples, and Table 2 to Table 5 may have other transformations. For example, formats, row content sequences, or column content sequences in Table 2 to Table 5 are transformed; or Table 2 to Table 5 may include some content in the foregoing example tables; or Table 2 to Table 5 may include more content based on content in the foregoing example tables. This is not limited in this application.

The data processing apparatus sends the statistical information to the data orchestration apparatus. In this way, the data orchestration apparatus can learn of a quantity of data packets/bytes passing through the data processing apparatus, so that the data orchestration apparatus determines whether to continue to allocate a data packet to the data processing apparatus subsequently for processing. It is assumed that the statistical information is obtained through statistics collection at a granularity of the transmission path information. In this case, the data orchestration apparatus can determine a quantity of data packets/bytes passing through the data processing apparatus on each transmission path. It is assumed that the statistical information is obtained through statistics collection at a granularity of the data service information. In this case, the data orchestration apparatus can determine quantities of data packets/bytes of different data services processed by the data processing apparatus, to provide a reference for processing of data packets in subsequent coordinated allocation performed by the data orchestration apparatus.

It may be understood that, in the method 200, the data processing apparatus #0 corresponds to the first apparatus in the summary, the data processing apparatus #1 corresponds to the second apparatus in the summary, and the data orchestration apparatus corresponds to the third apparatus in the summary.

Alternatively, the data processing apparatus #1 corresponds to the first apparatus in the summary, the data processing apparatus #2 corresponds to the second apparatus in the summary, and the data orchestration apparatus corresponds to the third apparatus in the summary.

According to the method 200 provided in this application, after obtaining the service data, the data processing apparatus #0 may determine the transmission path information based on the data service information, determine the next processing node of the data packet, and transmit a processed data payload and the data service information to the next processing node. The subsequent data processing apparatus may determine a next processing node of the data packet based on the data service information in the data packet and the correspondence between the data service information and the transmission path. In other words, in this solution, data packet processing can be implemented by a data processing apparatus in a data packet transmission process. In this way, a requirement for distributed data processing in a trend of communication sensing and computing convergence can be met, and data use efficiency can be improved.

The method 200 describes a data packet forwarding mechanism. In the forwarding mechanism, a data processing apparatus locally stores some forwarding information (for example, a correspondence between data service information and transmission path information) configured by a data orchestration apparatus. In other words, the data processing apparatus is stateful (for example, stores the forwarding information configured by the data orchestration apparatus). When forwarding a data packet, the data processing apparatus determines a next processing node of the data packet based on the data service information in the data packet and the locally stored correspondence between the data service information and the transmission path information, to transmit the data packet. If there is another forwarding mechanism when the data processing apparatus forwards the data packet, the data processing apparatus may select a forwarding mechanism by using the following method.

In a possible implementation, the data processing apparatus may select an appropriate forwarding mechanism based on a status of the data processing apparatus and a status of the forwarded data packet.

For example, the data processing apparatus is stateful, the data packet includes a status field, and the status field is set to stateless. In this case, the data processing apparatus selects the forwarding mechanism provided in the method 200 to forward the data packet. If the data processing apparatus is stateless and the status field included in the data packet is set to stateful, or the data processing apparatus is stateful and the status field included in the data packet is set to stateful, or the data processing apparatus is stateless and the status field included in the data packet is set to stateless, the data processing apparatus may select a forwarding mechanism other than the forwarding mechanism in the method 200 to forward the data packet. This is not limited in this application.

It may be understood that the data packet is stateful, that is, the data packet carries the forwarding information (for example, the transmission path information). In this way, the data processing apparatus through which the data packet passes may not need to store the forwarding information. The data packet is stateless, that is, the data packet does not carry the forwarding information (for example, the transmission path information). In this way, the data processing apparatus through which the data packet passes needs to store the forwarding information.

In the foregoing solution, the data processing apparatus may select an appropriate forwarding mechanism as required, thereby improving data packet transmission flexibility and/or efficiency.

From a perspective of a system, the following describes how the data orchestration apparatus configures the transmission path information corresponding to the data service information in some special scenarios mentioned in the method 200 and how the data processing apparatus transmits the data packet based on the transmission path information.

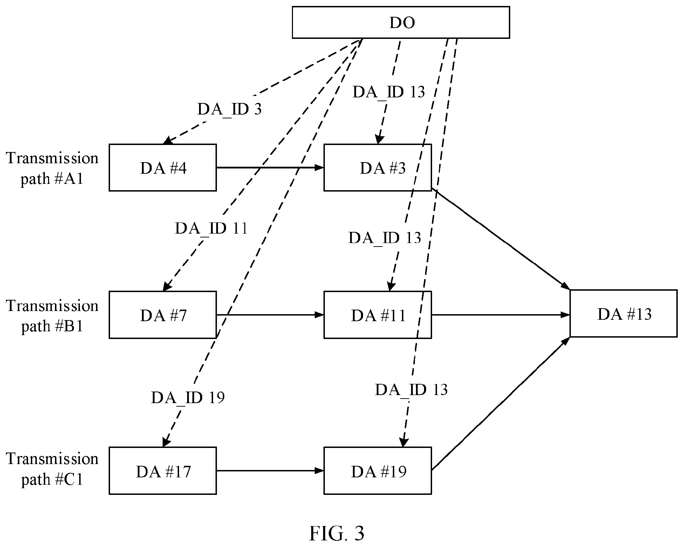

FIG. 3 is a diagram of a data aggregation scenario according to an embodiment of this application.

In FIG. 3, the following example is used for description: A data orchestration apparatus is a DO, a data processing apparatus is a DA, information about the data processing apparatus is an identifier of the DA, one piece of data service information corresponds to three pieces of transmission path information. This application is not limited thereto.

The DO determines, based on a specific piece of data service information such as DS_ID 3 indicating data aggregation and a capability/function of each data processing apparatus, three transmission paths corresponding to DS_ID 3, that is, a transmission path #A1, a transmission path #B1, and a transmission path #C1. The transmission path #A1 is a DA #4→a DA #3→a DA#13, the transmission path #B1 is a DA #7→a DA #11→the DA#13, and the transmission path #C1 is a DA #17→a DA #19→the DA #13.

The DO sends a correspondence between DS_ID 3 and transmission path information (DA_ID 3) to the DA #4, and sends a correspondence between DS_ID 3 and transmission path information (DA_ID 13) to the DA #3. The DO sends a correspondence between DS_ID 3 and transmission path information (DA_ID 11) to the DA #7, and sends a correspondence between DS_ID 3 and transmission path information (DA_ID 13) to the DA #11. The DO sends a correspondence between DS_ID 3 and transmission path information (DA_ID 19) to the DA #17, and sends a correspondence between DS_ID 3 and transmission path information (DA_ID 13) to the DA #19.

The DA #4 (corresponding to the data processing apparatus #0 in the foregoing description) is configured to collect temperatures of an area #1 at different times in a period of time, the DA #7 (corresponding to the data processing apparatus #0 in the foregoing description) is configured to collect temperatures of an area #2 at different times in a period of time, and the DA #17 (corresponding to the data processing apparatus #0 in the foregoing description) is configured to collect temperatures of an area #3 at different times in a period of time.

After collecting the temperatures of the area #1 at different times in the period of time, the DA #4 encapsulates the collected temperatures into a data packet #A1. A header of the data packet #A1 includes DS_ID 3. The DA #4 sends the data packet #A1 to the DA #3 (corresponding to the data processing apparatus #1 in the foregoing description). After receiving the data packet #A1, the DA #3 processes data (that is, the temperatures) in the data packet #A1. For example, an average temperature #1 of the area #1 is obtained through processing, and a next processing node, that is, the DA #13, is determined based on the correspondence between DS_ID 3 and the transmission path information (DA_ID 13). The DA #3 sends a data packet #A2 to the DA #13. The data packet #A2 includes the average temperature #1 of the area #1 and DS_ID 3.

After collecting the temperatures of the area #2 at different times in the period of time, the DA #7 encapsulates the collected temperatures into a data packet #B1. A header of the data packet #B1 includes DS_ID 3. The DA #7 sends the data packet #B1 to the DA #11 (corresponding to the data processing apparatus #1 in the foregoing description). After receiving the data packet #B1, the DA #11 processes data (that is, the temperatures) in the data packet #B1. For example, an average temperature #2 of the area #2 is obtained through processing, and a next processing node, that is, the DA #13, is determined based on the correspondence between DS_ID 3 and the transmission path information (DA_ID 13). The DA #11 sends a data packet #B2 to the DA #13. The data packet #B2 includes the average temperature #2 of the area #2 and DS_ID 3.

After collecting the temperatures of the area #3 at different times in the period of time, the DA #17 encapsulates the collected temperatures into a data packet #C1. A header of the data packet #C1 includes DS_ID 3. The DA #17 sends the data packet #C1 to the DA #19 (corresponding to the data processing apparatus #1 in the foregoing description). After receiving the data packet #C1, the DA #19 processes data (that is, the temperatures) in the data packet #C1. For example, an average temperature #3 of the area #3 is obtained through processing, and a next processing node, that is, the DA #13, is determined based on the correspondence between DS_ID 3 and the transmission path information (DA_ID 13). The DA #19 sends a data packet #C2 to the DA #13. The data packet #C2 includes the average temperature #3 of the area #3 and DS_ID 3.

After receiving the data packet #A2, the data packet #B2, and the data packet #C2, the DA #13 (corresponding to the data processing apparatus #2 in the foregoing description) processes the average temperature #1, the average temperature #2, and the average temperature #3 in the packets to obtain an average temperature #4 of the area #1, the area #2, and the area #3. The average temperature #4 is a processing result of the data aggregation service. In addition, the DA #13 can learn based on the local correspondence between DS_ID 3 and the transmission path information that there is no next processing node. In other words, the average temperature #4 does not need to be sent to another apparatus. Processing of the data aggregation service ends here.

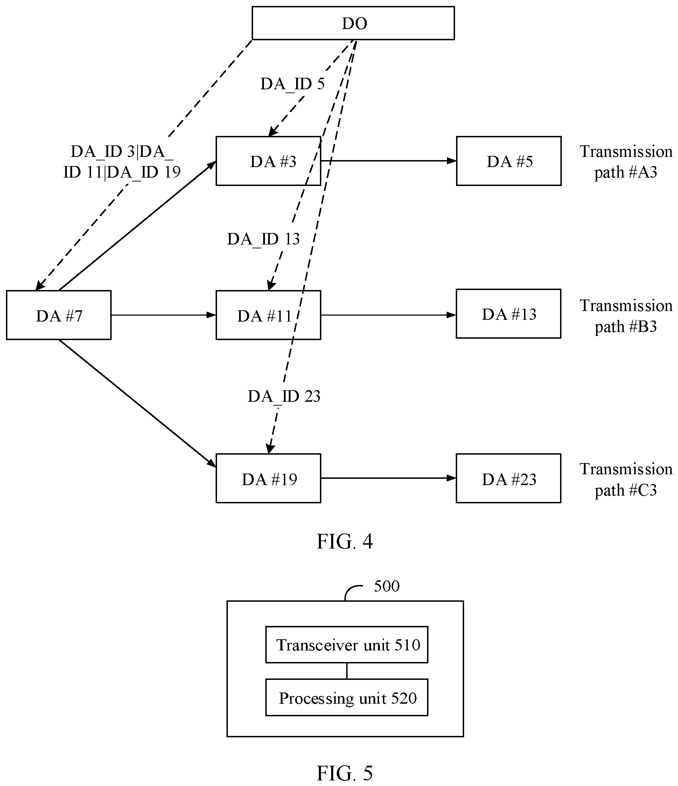

FIG. 4 is a diagram of a distributed learning scenario according to an embodiment of this application.

In FIG. 4, the following example is used for description: A data orchestration apparatus is a DO, a data processing apparatus is a DA, information about the data processing apparatus is an identifier of the DA, one piece of data service information corresponds to three pieces of transmission path information. This application is not limited thereto.

The DO determines, based on a specific piece of data service information such as DS_ID 1 indicating federated learning and a capability/function of each data processing apparatus, three transmission paths corresponding to DS_ID 1, that is, a transmission path #A2, a transmission path #B2, and a transmission path #C2. A data packet transmission path corresponding to the transmission path #A2 is a DA #5 (corresponding to DA_ID: 5)→a DA #3 (corresponding to DA_ID: 3)→a DA #7 (corresponding to DA_ID: 7). A data packet transmission path corresponding to the transmission path #B2 is a DA #13 (corresponding to DA_ID: 13)→a DA #11 (corresponding to DA_ID: 11) →the DA #7. A data packet transmission path corresponding to the transmission path #C2 is a DA #23 (corresponding to DA_ID: 23)→a DA #19 (corresponding to DA_ID: 19)→the DA #7.

In the example in FIG. 4, it is assumed that the DA #5, the DA #13, and the DA #23 are clients of federated learning. Local model training is performed based on locally obtained service data. Then, a trained local model parameter is processed to obtain a data payload, and the data payload and data service information are encapsulated into a data packet. The data packets are sent to the DA #3, the DA #11, and the DA #19. The DA #3, the DA #11, and the DA #19 each may perform model compression on a data payload (corresponding to the local model parameter) in the received data packet, encapsulate a compressed model parameter and the data service information into a data packet, and send the data packet to the DA #7. The DA #7 aggregates a received compression model parameter. After the aggregation, the DA #7 needs to distribute a global model parameter obtained through aggregation to the clients: the DA #5, the DA #13, and the DA #23.

Specifically, after the DO determines a federated learning path, for a method of indicating a correspondence between the data service information and different transmission path information to the DA #5, the DA #13, the DA #23, the DA #3, the DA #11, and the DA #19, how the DA #5, the DA #13, the DA #23, the DA #3, the DA #11, and the DA #19 transmit data packets based on the correspondence between the data service information and the transmission path information, and specific content included in the data packet, refer to the example of data aggregation described in FIG. 3. Details are not described herein again. FIG. 4 does not show the transmission path #A2, the transmission path #B2, the transmission path #C2, and an arrow direction of each path. The following mainly describes related content related to data distribution in federated learning.

DS_ID 1 further corresponds to three transmission paths, namely, a transmission path #A3, a transmission path #B3, and a transmission path #C3. The transmission path #A3 is a DA #7→a DA #3→a DA #5, the transmission path #B3 is the DA #7→a DA #11→a DA #13, and the transmission path #C3 is the DA #7→a DA #19→a DA #23.

The DO sends a correspondence between DS_ID 1 and transmission path information (DA_ID 3|DA_ID 11| DA_ID 19) to the DA #7. The DO sends a correspondence between DS_ID 1 and transmission path information (DA_ID 5) to the DA #3. The DO sends a correspondence between DS_ID 1 and transmission path information (DA_ID 13) to the DA #11. The DO sends a correspondence between DS_ID 1 and transmission path information (DA_ID 23) to the DA #19.

It may be understood that the foregoing transmission path information is identification information of a next data processing apparatus of each data processing apparatus. This is not limited in this application. Any transmission path information that can be used by each data processing apparatus to determine a next data processing apparatus falls within the protection scope of this application.

The DA #7 (corresponding to the data processing apparatus #0 in the foregoing description) is configured to distribute the global model parameter obtained through aggregation to the clients. If the DA #7 divides the global model parameter into a global submodel parameter #1, a global submodel parameter #2, and a global submodel parameter #3, the DA #7 sends a data packet #a1 to the DA #3 (corresponding to the data processing apparatus #1 in the foregoing description). The data packet #a1 includes a data payload corresponding to the global submodel parameter #1 and DS_ID: 1. The DA #7 sends a data packet #b1 to the DA #11 (corresponding to the data processing apparatus #1 in the foregoing description). The data packet #b1 includes a data payload corresponding to the global submodel parameter #2 and DS_ID: 1. The DA #7 sends a data packet #c1 to the DA #19 (corresponding to the data processing apparatus #1 in the foregoing description). The data packet #c1 includes a data payload corresponding to the global submodel parameter #3 and DS_ID: 1.

After receiving the data packet #a1, the DA #3 processes the data payload corresponding to the global submodel parameter #1 in the data packet #a1. For example, the data payload corresponding to the global submodel parameter #1 is decompressed, and a next processing node, that is, the DA #5, is determined based on DS_ID 1 in the data packet #a1 and the correspondence between DS_ID 1 and transmission path information (DA_ID 5). The DA #3 sends a data packet #a2 to the DA #5. The data packet #a2 includes the decompressed data payload corresponding to the global submodel parameter #1 and DS_ID 1.

After receiving the data packet #b1, the DA #11 processes the data payload corresponding to the global submodel parameter #2 in the data packet #b1. For example, the data payload corresponding to the global submodel parameter #2 is decompressed, and a next processing node, that is, the DA #13, is determined based on DS_ID 1 in the data packet #b1 and the correspondence between DS_ID 1 and transmission path information (DA_ID 13). The DA #11 sends a data packet #b2 to the DA #13. The data packet #b2 includes the decompressed data payload corresponding to the global submodel parameter #2 and DS_ID 1.

After receiving the data packet #c1, the DA #19 processes the data payload corresponding to the global submodel parameter #3 in the data packet #c1. For example, the data payload corresponding to the global submodel parameter #3 is decompressed, and a next processing node, that is, the DA #23, is determined based on DS_ID 1 in the data packet #c1 and the correspondence between DS_ID 1 and transmission path information (DA_ID 23). The DA #19 sends a data packet #c2 to the DA #23. The data packet #c2 includes the decompressed data payload corresponding to the global submodel parameter #3 and DS_ID 1.

It may be understood that in a federated learning process, there may be a plurality of data aggregation processes and data distribution processes until global model training is completed.

The steps in the dashed lines in the foregoing flowchart are optional steps, and a sequence of the steps is determined based on internal logic of the method. Sequence numbers shown in the foregoing flowchart are merely examples, and do not limit a sequence of the steps in this application.

It should be further understood that the methods provided in embodiments of this application may be used separately, or may be used in combination. This is not limited in this application. Various implementations provided in embodiments of this application may be used separately, or may be used in combination. This is not limited in this application. Various examples provided in embodiments of this application may be used separately, or may be used in combination. This is not limited in this application.

It should be understood that the term "and/or" in this application describes only an association relationship between associated objects and represents that three relationships may exist. For example, A and/or B may represent the following three cases: Both A and B exist, only A exists, and only B exists, where A and B may be singular or plural. In addition, the character "/" in this specification usually indicates an "or" relationship between the associated objects, but may also indicate an "and/or" relationship. For details, refer to the context for understanding.

In embodiments of this application, unless otherwise specified, "a plurality of" means two or more.

In embodiments of this application, "at least one item (piece)" means one or more items (pieces), and "at least two items (pieces)" and "a plurality of items (pieces)" mean two or more items (pieces). "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be noted that, an execution entity shown in FIG. 2, FIG. 3, or FIG. 4 is merely an example, and the execution entity may alternatively be a chip, a chip system, or a processor that supports the execution entity in implementing the method shown in FIG. 2, FIG. 3, or FIG. 4. This is not limited in this application.

The foregoing describes the method embodiments in embodiments of this application with reference to the accompanying drawings, and the following describes apparatus embodiments in embodiments of this application. It may be understood that the descriptions of the method embodiments may correspond to the descriptions of the apparatus embodiments. Therefore, for a part that is not described, refer to the foregoing method embodiments.

It may be understood that, in each of the foregoing method embodiments, a method and an operation implemented by the data processing apparatus #0 may also be implemented by a component (for example, a chip or a circuit) in the data processing apparatus #0, and a method and an operation implemented by the data processing apparatus #1 may also be implemented by a component (for example, a chip or a circuit) in the data processing apparatus #1. A method and an operation implemented by the data orchestration apparatus may also be implemented by a component (for example, a chip or a circuit) in the data orchestration apparatus.

The solutions provided in embodiments of this application are mainly described above from a perspective of interaction between apparatuses. It may be understood that, to implement the foregoing functions, each apparatus such as a transmitter device or a receiver device includes a corresponding hardware structure and/or software module for performing each function. A person skilled in the art should be able to be aware that, in combination with units and algorithm steps of the examples described in embodiments disclosed in this specification, this application can be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. Descriptions are provided below by using an example in which each functional module is obtained through division based on each corresponding function.

FIG. 5 is a block diagram of a communication apparatus according to an embodiment of this application. The communication apparatus 500 shown in FIG. 5 includes a transceiver unit 510 and a processing unit 520. The transceiver unit 510 may communicate with the outside, and the processing unit 520 is configured to process data. The transceiver unit 510 may also be referred to as a communication interface or a communication unit.

Optionally, the transceiver unit 510 may include a sending unit and a receiving unit. The sending unit is configured to perform a sending operation in the foregoing method embodiment. The receiving unit is configured to perform a receiving operation in the foregoing method embodiment.

It should be noted that the communication apparatus 500 may include the sending unit, but does not include the receiving unit. Alternatively, the communication apparatus 500 may include the receiving unit, but does not include the sending unit. This may be specifically determined based on whether the foregoing solution performed by the communication apparatus 500 includes a sending action and a receiving action.

Optionally, the communication apparatus 500 may further include a memory cell. The memory cell may be configured to store instructions and/or data. The processing unit 520 may read the instructions and/or the data in the memory cell.

In a design, the communication apparatus 500 may be configured to perform an action performed by the data processing apparatus #1 in the foregoing method embodiment. The data processing apparatus #1 may be a functional network element in a network; or may be a chip or a circuit in a terminal device, a network device, a core network device, or an operations, administration, and maintenance device; or may be a logical module or software that can implement all or some functions of a terminal device, a network device, a core network device, or an operations, administration, and maintenance device. This is not limited in this application.

Optionally, the communication apparatus 500 may be the data processing apparatus #1. The transceiver unit 510 is configured to perform a receiving or sending operation of the data processing apparatus #1 in the foregoing method embodiment. The processing unit 520 is configured to perform an internal processing operation of the data processing apparatus #1 in the foregoing method embodiment.

Optionally, the communication apparatus 500 may be a device including the data processing apparatus #1. Alternatively, the communication apparatus 500 may be a component configured in the data processing apparatus #1, for example, a chip in the data processing apparatus #1. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to obtain a first data packet. The first data packet includes data service information. The processing unit 520 is configured to determine transmission path information based on the data service information and a correspondence between the data service information and the transmission path information. The transmission path information includes information about a data processing apparatus #2. The transceiver unit 510 is further configured to send a second data packet to the data processing apparatus #2. The second data packet includes the data service information. A data payload in the second data packet is obtained by processing a data payload in the first data packet.

In a possible implementation, the information about the data processing apparatus #2 is identification information or address information of the data processing apparatus #2.

In a possible implementation, the data service information includes first data service information, and the first data service information corresponds to N pieces of transmission path information. Herein, N is an integer greater than or equal to 1.

In a possible implementation, the correspondence indicated by the correspondence information includes a correspondence between the first data service information and the N pieces of transmission path information. Herein, N is an integer greater than 1. The transceiver unit 510 is further configured to send N data packets to N data processing apparatuses #2. Each data processing apparatus #2 is associated with one data packet. Each data packet includes the first data service information.

In a possible implementation, the correspondence indicated by the correspondence information includes a correspondence between the first data service information and one of the N pieces of transmission path information. Herein, N is an integer greater than 1.

In a possible implementation, the transceiver unit 510 is further configured to receive configuration information from a data orchestration apparatus. The configuration information is used to configure at least one of the following: a data packet statistics collection mode, a data packet statistics collection periodicity, and a valid time of the transmission path information.

In a possible implementation, the transceiver unit 510 is further configured to receive update information from the data orchestration apparatus. The update information is used to update the transmission path information corresponding to the data service information.

In a possible implementation, the transceiver unit 510 is further configured to receive read information from the data orchestration apparatus. The read information is used to read the transmission path information corresponding to the data service information.

In a possible implementation, the transceiver unit 510 is further configured to send read response information to the data orchestration apparatus. The read response information may include the transmission path information corresponding to the data service information.

In a possible implementation, the transceiver unit 510 is further configured to receive delete information from the data orchestration apparatus. The delete information is used to delete the transmission path information corresponding to the data service information.

In a possible implementation, the transceiver unit 510 is further configured to send statistical information to the data orchestration apparatus. The statistical information includes data packet quantity information or data packet byte quantity information.

In a possible implementation, the statistical information is obtained through statistics collection at a granularity of data packet transmission path information or data service information.

In a possible implementation, the data service information is any one of the following: an identifier of a federated learning service, an identifier of a distributed learning service, or an identifier of a data aggregation service.

In another design, the communication apparatus 500 may be configured to perform an action performed by the data processing apparatus #0 in the foregoing method embodiment. The data processing apparatus #0 may be a functional network element in a network; or may be a chip or a circuit in a terminal device, a network device, a core network device, or an operations, administration, and maintenance device; or may be a logical module or software that can implement all or some functions of a terminal device, a network device, a core network device, or an operations, administration, and maintenance device. This is not limited in this application.

Optionally, the communication apparatus 500 may be the data processing apparatus #0. The transceiver unit 510 is configured to perform a receiving or sending operation of the data processing apparatus #0 in the foregoing method embodiment. The processing unit 520 is configured to perform an internal processing operation of the data processing apparatus #0 in the foregoing method embodiment.

Optionally, the communication apparatus 500 may be a device including the data processing apparatus #0. Alternatively, the communication apparatus 500 may be a component configured in the data processing apparatus #0, for example, a chip in the data processing apparatus #0. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to obtain service data. The processing unit 520 is configured to determine transmission path information based on data service information and a correspondence between the data service information and the transmission path information. The transmission path information includes information about a data processing apparatus #1. The transceiver unit 510 is further configured to send a third data packet to the data processing apparatus #1. The third data packet includes the data service information and a data payload corresponding to the service data.

In a possible implementation, the information about the data processing apparatus #1 is identification information or address information of the data processing apparatus #1.

In a possible implementation, the transceiver unit 510 is further configured to receive correspondence information from a data orchestration apparatus. The correspondence information indicates the correspondence between the data service information and the transmission path information. In a possible implementation, the correspondence indicated by the correspondence information includes a correspondence between the first data service information and N pieces of transmission path information. Herein, N is an integer greater than 1. The transceiver unit is further configured to send N data packets to N data processing apparatuses #1. Each data processing apparatus #1 is associated with one data packet. Each data packet includes the first data service information.

In a possible implementation, the correspondence indicated by the correspondence information includes a correspondence between the first data service information and one of the N pieces of transmission path information. Herein, N is an integer greater than 1.

In a possible implementation, the transceiver unit 510 is further configured to receive configuration information from a data orchestration apparatus. The configuration information is used to configure at least one of the following: a data packet statistics collection mode, a data packet statistics collection periodicity, and a valid time of the transmission path information.

In a possible implementation, the transceiver unit 510 is further configured to receive update information from the data orchestration apparatus. The update information is used to update the transmission path information corresponding to the data service information.

In a possible implementation, the transceiver unit 510 is further configured to receive read information from the data orchestration apparatus. The read information is used to read the transmission path information corresponding to the data service information.

In a possible implementation, the transceiver unit 510 is further configured to send read response information to the data orchestration apparatus. The read response information may include the transmission path information corresponding to the data service information.

In a possible implementation, the transceiver unit 510 is further configured to receive delete information from the data orchestration apparatus. The delete information is used to delete the transmission path information corresponding to the data service information.

In a possible implementation, the transceiver unit 510 is further configured to send statistical information to the data orchestration apparatus. The statistical information includes data packet quantity information or data packet byte quantity information.

In a possible implementation, the statistical information is obtained through statistics collection at a granularity of data packet transmission path information or data service information.

In a possible implementation, the data service information is any one of the following: an identifier of a federated learning service, an identifier of a distributed learning service, or an identifier of a data aggregation service.

In still another design, the communication apparatus 500 shown in FIG. 5 may be configured to perform an action performed by the data orchestration apparatus in the foregoing method embodiment.

Optionally, the communication apparatus 500 may be the data orchestration apparatus. The transceiver unit 510 is configured to perform a receiving or sending operation of the data orchestration apparatus in the foregoing method embodiment. The processing unit 520 is configured to perform an internal processing operation of the data orchestration apparatus in the foregoing method embodiment. The data orchestration apparatus may be a functional network element in a network, or may be a chip or a circuit in a network device or a core network device, or may be a logical module or software that can implement all or some functions of a network device or a core network device. This is not limited in this application.

Optionally, the communication apparatus 500 may be a device including the data orchestration apparatus. Alternatively, the communication apparatus 500 may be a component configured in the data orchestration apparatus, for example, a chip in the data orchestration apparatus. In this case, the transceiver unit 510 may be an interface circuit, a pin, or the like. Specifically, the interface circuit may include an input circuit and an output circuit, and the processing unit 520 may include a processing circuit.

In a possible implementation, the processing unit 520 is configured to generate correspondence information. The correspondence information indicates a correspondence between data service information and data packet transmission path information. The transmission path information includes information about a next data processing apparatus of a first data processing apparatus (a data processing apparatus #0 or a data processing apparatus #1). The transceiver unit is configured to send the correspondence information to the first data processing apparatus.

In a possible implementation, the information about the data processing apparatus is identification information or address information of the data processing apparatus.

In a possible implementation, the data service information includes first data service information, and the first data service information corresponds to N pieces of transmission path information. Herein, N is an integer greater than or equal to 1.

In a possible implementation, the correspondence indicated by the correspondence information includes a correspondence between the first data service information and the N pieces of transmission path information. Herein, N is an integer greater than 1.

In a possible implementation, the transceiver unit is further configured to send N pieces of correspondence information to N first data processing apparatuses. Each first data processing apparatus is associated with one piece of correspondence information. One piece of correspondence information indicates a correspondence between the data service information and one of the N pieces of transmission path information. Herein, N is an integer greater than 1.

In a possible implementation, the transceiver unit is further configured to send configuration information to the first data processing apparatus. The configuration information is used to configure at least one of the following: a data packet statistics collection mode, a data packet statistics collection periodicity, and a valid time of the transmission path information.

In a possible implementation, the transceiver unit is further configured to send update information to the first data processing apparatus. The update information is used to update the transmission path information corresponding to the data service information.

In a possible implementation, the transceiver unit is further configured to send read information to the first data processing apparatus. The read information is used to read the transmission path information corresponding to the data service information.

In a possible implementation, the transceiver unit is further configured to receive read response information from the first data processing apparatus. The read response information may include the transmission path information corresponding to the data service information.

In a possible implementation, the transceiver unit is further configured to send delete information to the first data processing apparatus. The delete information is used to delete the transmission path information corresponding to the data service information.

In a possible implementation, the transceiver unit is further configured to receive statistical information from the first data processing apparatus. The statistical information includes data packet quantity information or data packet byte quantity information.

In a possible implementation, the statistical information is obtained through statistics collection at a granularity of transmission path information or data service information.

In a possible implementation, the data service information is any one of the following: an identifier of a federated learning service, an identifier of a distributed learning service, or an identifier of a data aggregation service.

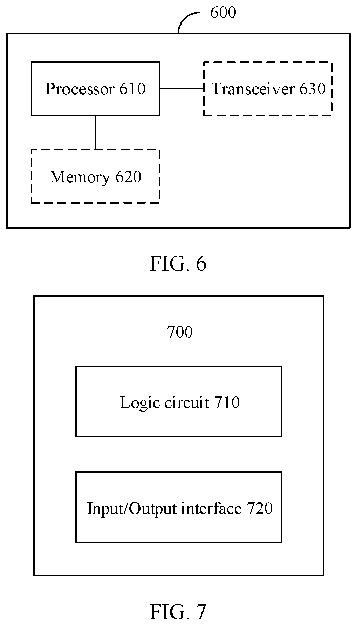

As shown in FIG. 6, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the method in the foregoing method embodiment is performed.

Optionally, the communication apparatus 600 includes one or more processors 610.

Optionally, as shown in FIG. 6, the communication apparatus 600 may further include the memory 620.

Optionally, the communication apparatus 600 may include one or more memories 620.

Optionally, the memory 620 and the processor 610 may be integrated together, or may be disposed separately.

Optionally, as shown in FIG. 6, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal.

Optionally, a component that is in the transceiver 630 and that is configured to implement a receiving function may be considered as a receiving module, and a component that is in the transceiver 630 and that is configured to implement a sending function may be considered as a sending module. In other words, the transceiver 630 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitter, a transmitting module, a transmitting circuit, or the like.

In a solution, the communication apparatus 600 is configured to implement an operation performed by the data processing apparatus #0 in the foregoing method embodiment. For example, the processor 610 is configured to implement an operation (for example, the operations of S210 and S220) internally performed by the data processing apparatus #0 in the foregoing method embodiment, and the transceiver 630 is configured to implement a receiving or sending operation (for example, the operations of S201, S230, S260, S261, S262, S263, and S270) performed by the data processing apparatus #0 in the foregoing method embodiment.

In another solution, the communication apparatus 600 is configured to implement an operation performed by the data processing apparatus #1 in the foregoing method embodiment. For example, the processor 610 is configured to implement an operation (for example, the operation of S240) internally performed by the data processing apparatus #1 in the foregoing method embodiment, and the transceiver 630 is configured to implement a receiving or sending operation (for example, the operations of S201, S230, S250, S260, S261, S262, S263, and S270) performed by the data processing apparatus #1 in the foregoing method embodiment.

In another solution, the communication apparatus 600 is configured to implement an operation performed by the data orchestration apparatus in the foregoing method embodiment. For example, the processor 610 is configured to implement an operation internally performed by the data orchestration apparatus in the foregoing method embodiment, and the transceiver 630 is configured to implement a receiving or sending operation (for example, the operations of S201, S260, S261, S262, S263, and S270) performed by the data orchestration apparatus in the foregoing method embodiment.

As shown in FIG. 7, an embodiment of this application further provides a communication apparatus 700. The communication apparatus 700 includes a logic circuit 710 and an input/output interface (input/output interface) 720.

The logic circuit 710 may be a processing circuit in the communication apparatus 700. The logic circuit 710 may be coupled to and connected to a memory cell, and invoke instructions in the memory cell, so that the communication apparatus 700 can implement the methods and functions in embodiments of this application. The input/output interface 720 may be an input/output circuit in the communication apparatus 700, and outputs information processed by the communication apparatus 700, or inputs to-be-processed data or signaling information to the communication apparatus 700 for processing.

In a solution, the communication apparatus 700 is configured to implement an operation performed by the data processing apparatus #0 in each of the foregoing method embodiments.

For example, the logic circuit 710 is configured to implement a processing-related operation performed by the data processing apparatus #0 in the foregoing method embodiment, for example, the processing operations of the data processing apparatus #0 in S210 and S220. The input/output interface 720 is configured to implement a sending-related operation and/or a receiving-related operation performed by the data processing apparatus #0 in the foregoing method embodiment, for example, the receiving and sending operations of the data processing apparatus #0 in S201, S230, S260, S261, S262, S263, and S270. For a specific operation performed by the logic circuit 710, refer to the foregoing descriptions of the processing unit 520. For an operation performed by the input/output interface 720, refer to the foregoing descriptions of the transceiver unit 510. Details are not described herein again.

In another solution, the communication apparatus 700 is configured to implement an operation performed by the data processing apparatus #1 in each of the foregoing method embodiments.

For example, the logic circuit 710 is configured to implement a processing-related operation performed by the data processing apparatus #1 in the foregoing method embodiment, for example, the processing operation of the data processing apparatus #1 in S240. The input/output interface 720 is configured to implement a sending-related operation and/or a receiving-related operation performed by the data processing apparatus #1 in the foregoing method embodiment, for example, the receiving and sending operations of the data processing apparatus #1 in S201, S230, S250, S260, S261, S262, S263, and S270. For a specific operation performed by the logic circuit 710, refer to the foregoing descriptions of the processing unit 520. For an operation performed by the input/output interface 720, refer to the foregoing descriptions of the transceiver unit 510. Details are not described herein again.

In another solution, the communication apparatus 700 is configured to implement an operation performed by the data orchestration apparatus in each of the foregoing method embodiments.

For example, the logic circuit 710 is configured to implement a processing-related operation performed by the data orchestration apparatus in the foregoing method embodiment, for example, the processing-related operation performed by the data orchestration apparatus in the foregoing method embodiment. The input/output interface 720 is configured to implement a sending-related operation and/or a receiving-related operation performed by the data orchestration apparatus in the foregoing method embodiment, for example, the receiving and sending operations of the data orchestration apparatus in S201, S260, S261, S262, S263, and S270. For a specific operation performed by the logic circuit 710, refer to the foregoing descriptions of the processing unit 720. For a specific operation performed by the logic circuit 710, refer to the foregoing descriptions of the processing unit 520. For an operation performed by the input/output interface 720, refer to the foregoing descriptions of the transceiver unit 510. Details are not described herein again.

It should be understood that the communication apparatus may be one or more chips. For example, the communication apparatus may be a field-programmable gate array (field-programmable gate array, FPGA), an application-specific integrated circuit (application-specific integrated circuit, ASIC), a system-on-chip (system-on-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that the processor in embodiments of this application may be an integrated circuit chip, and has a signal processing capability. In an implementation process, the steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor can implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another appropriate type.

According to the method provided in embodiments of this application, this application further provides a computer-readable medium. The computer-readable medium stores program code. When the program code is run on a computer, the computer is enabled to perform the method shown in the method embodiments. For example, when a computer program is executed by a computer, the computer is enabled to implement the method performed by the data orchestration apparatus or the method performed by the data processing apparatus in the foregoing method embodiments.

An embodiment of this application further provides a computer program product including instructions. When the instructions are executed by a computer, the computer is enabled to implement the method performed by the data orchestration apparatus or the method performed by the data processing apparatus in the foregoing method embodiments.

An embodiment of this application further provides a communication system, including a data orchestration apparatus and a data processing apparatus.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The data orchestration apparatus and the data processing apparatus in the foregoing apparatus embodiments correspond to the data orchestration apparatus and the data processing apparatus in the method embodiments, and corresponding modules or units perform corresponding steps. For example, a communication unit (transceiver) performs a receiving or sending step in the method embodiments, and a processing unit (processor) may perform a step other than the sending and receiving steps. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data packet transmission method, comprising:

   obtaining, by a first apparatus, a first data packet, wherein the first data packet comprises data service information;
   determining, by the first apparatus, transmission path information based on the data service information and a correspondence between the data service information and the transmission path information, wherein the transmission path information comprises information about a second apparatus; and
   sending, by the first apparatus, a second data packet to the second apparatus, wherein the second data packet comprises the data service information, and a data payload in the second data packet is obtained by processing a data payload in the first data packet.

2. A data packet transmission method, comprising:

   obtaining, by a first apparatus, service data;
   determining, by the first apparatus, transmission path information based on data service information and a correspondence between the data service information and the transmission path information, wherein the transmission path information comprises information about a second apparatus; and
   sending, by the first apparatus, a third data packet to the second apparatus, wherein the third data packet comprises the data service information and a data payload corresponding to the service data.

3. The method according to claim 1 or 2, wherein the information about the second apparatus is identification information or address information of the second apparatus.

4. The method according to any one of claims 1 to 3, wherein the method further comprises:
   receiving, by the first apparatus, correspondence information from a third apparatus, wherein the correspondence information indicates the correspondence between the data service information and the transmission path information.

5. The method according to any one of claims 1 to 4, wherein the data service information comprises first data service information, the first data service information corresponds to N pieces of transmission path information, and N is an integer greater than or equal to 1.

6. The method according to claim 5, wherein the correspondence indicated by the correspondence information comprises a correspondence between the first data service information and the N pieces of transmission path information, N is an integer greater than 1, and the sending, by the first apparatus, a third data packet to the second apparatus, or sending, by the first apparatus, a second data packet to the second apparatus comprises:
   sending, by the first apparatus, N data packets to N second apparatuses, wherein each second apparatus is associated with one data packet, and each data packet comprises the first data service information.

7. The method according to claim 5, wherein the correspondence indicated by the correspondence information comprises a correspondence between the first data service information and one of the N pieces of transmission path information, and N is an integer greater than 1.

8. The method according to any one of claims 1 to 7, wherein the method further comprises:
   receiving, by the first apparatus, configuration information from the third apparatus, wherein the configuration information is used to configure at least one of the following: a data packet statistics collection mode, a data packet statistics collection periodicity, and a valid time of the transmission path information.

9. The method according to any one of claims 1 to 8, wherein the method further comprises:
receiving, by the first apparatus, update information from the third apparatus, wherein the update information is used to update the transmission path information corresponding to the data service information.

10. The method according to any one of claims 1 to 9, wherein the method further comprises:
receiving, by the first apparatus, read information from the third apparatus, wherein the read information is used to read the transmission path information corresponding to the data service information.

11. The method according to any one of claims 1 to 10, wherein the method further comprises:
receiving, by the first apparatus, delete information from the third apparatus, wherein the delete information is used to delete the transmission path information corresponding to the data service information.

12. The method according to any one of claims 1 to 11, wherein the method further comprises:
sending, by the first apparatus, statistical information to the third apparatus, wherein the statistical information comprises data packet quantity information or data packet byte quantity information.

13. The method according to claim 12, wherein the statistical information is obtained through statistics collection at a granularity of data packet transmission path information or data service information.

14. The method according to any one of claims 1 to 13, wherein the data service information is any one of the following: an identifier of a federated learning service, an identifier of a distributed learning service, or an identifier of a data aggregation service.

15. A data packet transmission method, comprising:

generating, by a third apparatus, correspondence information, wherein the correspondence information indicates a correspondence between data service information and data packet transmission path information, and the transmission path information comprises information about a next data processing apparatus of a first apparatus; and
sending, by the third apparatus, the correspondence information to the first apparatus.

16. The method according to claim 15, wherein the information about the data processing apparatus is identification information or address information of the data processing apparatus.

17. The method according to claim 15 or 16, wherein the data service information comprises first data service information, the first data service information corresponds to N pieces of transmission path information, and N is an integer greater than or equal to 1.

18. The method according to claim 17, wherein the correspondence indicated by the correspondence information comprises a correspondence between the first data service information and the N pieces of transmission path information, and N is an integer greater than 1.

19. The method according to claim 17, wherein the sending, by the third apparatus, the correspondence information to the first apparatus comprises:
sending, by the third apparatus, N pieces of correspondence information to N first apparatuses, wherein each first apparatus is associated with one piece of correspondence information, a correspondence indicated by the piece of correspondence information comprises a correspondence between the first data service information and one of the N pieces of transmission path information, and N is an integer greater than 1.

20. The method according to any one of claims 15 to 19, wherein the method further comprises:
sending, by the third apparatus, configuration information to the first apparatus, wherein the configuration information is used to configure at least one of the following: a data packet statistics collection mode, a data packet statistics collection periodicity, and a valid time of the transmission path information.

21. The method according to any one of claims 15 to 20, wherein the method further comprises:
sending, by the third apparatus, update information to the first apparatus, wherein the update information is used to update the transmission path information corresponding to the data service information.

22. The method according to any one of claims 15 to 21, wherein the method further comprises:
sending, by the third apparatus, read information to the first apparatus, wherein the read information is used to read the transmission path information corresponding to the data service information.

23. The method according to any one of claims 15 to 22, wherein the method further comprises:
sending, by the third apparatus, delete information to the first apparatus, wherein the delete information is used to delete the transmission path information corresponding to the data service information.

24. The method according to any one of claims 15 to 23, wherein the method further comprises:
receiving, by the third apparatus, statistical information from the first apparatus, wherein the statistical information comprises data packet quantity information or data packet byte quantity information.

25. The method according to claim 24, wherein the statistical information is obtained through statistics collection at a granularity of transmission path information or data service information.

26. The method according to any one of claims 15 to 25, wherein the data service information is any one of the following: an identifier of a federated learning service, an identifier of a distributed learning service, or an identifier of a data aggregation service.

27. A data packet transmission method, wherein the method is applied to a communication system, the communication system comprises a first apparatus and a third apparatus, and the method comprises:

    generating, by a third apparatus, correspondence information, wherein the correspondence information indicates a correspondence between data service information and data packet transmission path information;
    sending, by the third apparatus, the correspondence information to the first apparatus; and
    receiving, by the first apparatus, the correspondence information.

28. The method according to claim 27, wherein the method further comprises:

    obtaining, by the first apparatus, a first data packet, wherein the first data packet comprises the data service information;
    determining, by the first apparatus, the transmission path information based on the data service information and the correspondence information, wherein the transmission path information comprises information about a second apparatus; and
    sending, by the first apparatus, a second data packet to the second apparatus, wherein the second data packet comprises the data service information, and a data payload in the second data packet is obtained by processing a data payload in the first data packet.

29. The method according to claim 27, wherein the method further comprises:

    obtaining, by the first apparatus, service data;
    determining, by the first apparatus, the transmission path information based on the data service information and the correspondence information, wherein the transmission path information comprises information about a second apparatus; and
    sending, by the first apparatus, a third data packet to the second apparatus, wherein the third data packet comprises the data service information and a data payload corresponding to the service data.

30. The method according to claim 28 or 29, wherein the information about the second apparatus is identification information or address information of the second apparatus.

31. The method according to any one of claims 27 to 30, wherein the data service information comprises first data service information, the first data service information corresponds to N pieces of transmission path information, and N is an integer greater than or equal to 1.

32. The method according to claim 31, wherein the correspondence indicated by the correspondence information comprises a correspondence between the first data service information and the N pieces of transmission path information, and N is an integer greater than 1;
the determining, by the first apparatus, the transmission path information based on the data service information and the correspondence information comprises:

determining, by the first apparatus, N second apparatuses based on the data service information and the correspondence information, and
the sending, by the first apparatus, a third data packet to the second apparatus comprises:
sending, by the first apparatus, N data packets to the N second apparatuses, wherein each second apparatus is associated with one data packet, and each data packet comprises the first data service information.

33. The method according to claim 31, wherein the sending, by the third apparatus, the correspondence information to the first apparatus comprises:
sending, by the third apparatus, N pieces of correspondence information to N first apparatuses, wherein each first apparatus is associated with one piece of correspondence information, a correspondence indicated by the piece of correspondence information comprises a correspondence between the first data service information and one of the N pieces of transmission path information, and N is an integer greater than 1.

34. The method according to any one of claims 27 to 33, wherein the data service information is any one of the following: an identifier of a federated learning service, an identifier of a distributed learning service, or an identifier of a data aggregation service.

35. A communication apparatus, wherein the apparatus comprises a unit configured to perform the steps in the method according to any one of claims 1 to 14, or the apparatus comprises a unit configured to perform the steps in the method according to any one of claims 15 to 26.

36. A communication apparatus, wherein the apparatus comprises a processor, the processor is coupled to a memory, and the memory stores instructions; and when the instructions are run by the processor, the processor is enabled to perform the method according to any one of claims 1 to 14, or perform the method according to any one of claims 15 to 26.

37. A communication apparatus, wherein the apparatus comprises a logic circuit, and the logic circuit is configured to: couple to an input/output interface, and perform data transmission through the input/output interface, to perform the method according to any one of claims 1 to 14, or perform the method according to any one of claims 15 to 26.

38. A communication system, wherein the system comprises a first apparatus and a third apparatus, the first apparatus is configured to perform the method according to any one of claims 1 to 14, and the third apparatus is configured to perform the method according to any one of claims 15 to 26.

39. A computer-readable storage medium, wherein the computer-readable storage medium is configured to store a computer program, and when the computer program is run on a computer, the computer is enabled to perform the method according to any one of claims 1 to 14, or perform the method according to any one of claims 15 to 26.

40. A computer program product, wherein the computer program product comprises computer program code, and when the computer program code is run, the method according to any one of claims 1 to 14 is implemented, or the method according to any one of claims 15 to 26 is performed.

**Data plane**

Data orchestration apparatus 30

Trusted apparatus 40

Data source 00

Data processing apparatus 10

Data processing apparatus 20

Data processing apparatus 22

Data consumer 50

Data communication network

Storage apparatus 24

Data source 01

Data processing apparatus 11

Data processing apparatus 21

Data processing apparatus 23

Data consumer 51

100

FIG. 1

200

| Data orchestration apparatus | Data processing apparatus #0 | Data processing apparatus #1 | Data processing apparatus #2 |
|---|---|---|---|

S201: Correspondence information #1 → Correspondence information #2 →

S210: Obtain service data

S220: Determine the data processing apparatus #1

S230: Data packet ①

S240: Determine the data processing apparatus #2

S250: Data packet ②

S260: Configuration information #1 → Configuration information #2 → Configuration information #3 →

S261: Update information #1 → Update information # 2 →

S262: Read information #1 → Read information # 2 →

S263: Delete information #1 → Delete information #2 →

S270: Statistical information #1 ← Statistical information #2 — Statistical information #3

FIG. 2

FIG. 3

DO

DA_ID 5

DA_ID 3|DA_
ID 11|DA_ID 19

DA #3

DA #5   Transmission
        path #A3

DA_ID 13

DA #7

DA #11

DA #13   Transmission
         path #B3

DA_ID 23

DA #19

DA #23   Transmission
         path #C3

FIG. 4

500

Transceiver unit 510

Processing unit 520

FIG. 5

600

Processor 610 ——— Transceiver 630

Memory 620

FIG. 6

700

Logic circuit 710

Input/Output interface 720

FIG. 7

## INTERNATIONAL SEARCH REPORT

| International application No. |
|---|
| **PCT/CN2022/116828** |

### A. CLASSIFICATION OF SUBJECT MATTER

H04L45/0377(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

WPABSC; CNTXT; ENTXTC; VEN; DWPI; ENTTXT; 3GPP: 编排, 业务, 服务, 类型, 多播, 广播, 联邦, 汇聚, 通道, 链路, 路径, 映射, 关系, Orchestration, Service, Type, Multicast, Broadcast, Federal, Convergence, Channel, Link, Path, Mapping, Relationship

### C. DOCUMENTS CONSIDERED TO BE RELEVANT

| Category* | Citation of document, with indication, where appropriate, of the relevant passages | Relevant to claim No. |
|---|---|---|
| E | CN 115734168 A (HUAWEI TECHNOLOGIES CO., LTD.) 03 March 2023 (2023-03-03) description, paragraphs [0004]-[0250] | 1-7, 14-19, 26-40 |
| X | CN 109150720 A (ZTE CORP.) 04 January 2019 (2019-01-04) description, paragraphs [0003]-[0147] | 1-40 |
| X | CN 103650436 A (HUAWEI TECHNOLOGIES CO., LTD.) 19 March 2014 (2014-03-19) description, paragraphs [0004]-[0103] | 1-40 |
| X | CN 113938904 A (HUAWEI TECHNOLOGIES CO., LTD.) 14 January 2022 (2022-01-14) description, paragraphs [00050]-[0149] | 1-40 |
| A | CN 111194051 A (HUAWEI TECHNOLOGIES CO., LTD.) 22 May 2020 (2020-05-22) entire document | 1-40 |
| A | US 2021218629 A1 (HUAWEI TECHNOLOGIES CO., LTD.) 15 July 2021 (2021-07-15) entire document | 1-40 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 April 2023** | **02 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/116828**

| Patent document cited in search report | | | Publication date (day/month/year) | Patent family member(s) | | | Publication date (day/month/year) |
|---|---|---|---|---|---|---|---|
| CN | 115734168 | A | 03 March 2023 | None | | | |
| CN | 109150720 | A | 04 January 2019 | CN | 109150720 | B | 12 April 2022 |
| CN | 103650436 | A | 19 March 2014 | EP | 3016329 | A1 | 04 May 2016 |
| | | | | EP | 3016329 | A4 | 21 March 2018 |
| | | | | US | 2016142290 | A1 | 19 May 2016 |
| | | | | US | 10230627 | B2 | 12 March 2019 |
| | | | | WO | 2015010307 | A1 | 29 January 2015 |
| | | | | CN | 103650436 | B | 28 September 2016 |
| | | | | EP | 3016329 | B1 | 21 March 2018 |
| CN | 113938904 | A | 14 January 2022 | WO | 2022001640 | A1 | 14 January 2022 |
| CN | 111194051 | A | 22 May 2020 | WO | 2020098747 | A1 | 22 May 2020 |
| US | 2021218629 | A1 | 15 July 2021 | EP | 3849137 | A1 | 14 July 2021 |
| | | | | EP | 3849137 | A4 | 13 October 2021 |
| | | | | WO | 2020063372 | A1 | 02 April 2020 |
| | | | | US | 11477078 | B2 | 18 October 2022 |
| | | | | CN | 110971432 | A | 07 April 2020 |
| | | | | CN | 110971432 | B | 18 May 2021 |

Form PCT/ISA/210 (patent family annex) (July 2022)